(19) Europäisches Patentamt
European Patent Office
Office européen des brevets

(11) **EP 4 582 848 A1**

(12) **EUROPEAN PATENT APPLICATION**
published in accordance with Art. 153(4) EPC

(43) Date of publication:
**09.07.2025 Bulletin 2025/28**

(21) Application number: **23860228.8**

(22) Date of filing: **25.08.2023**

(51) International Patent Classification (IPC):
*G02B 13/04* (2006.01)    *G02B 13/18* (2006.01)

(52) Cooperative Patent Classification (CPC):
**G02B 13/04; G02B 13/18**

(86) International application number:
**PCT/JP2023/030790**

(87) International publication number:
**WO 2024/048466 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022  JP 2022136280**
**29.08.2022  JP 2022136287**
**29.08.2022  JP 2022136291**
**29.08.2022  JP 2022136294**
**29.08.2022  JP 2022136302**

(71) Applicant: **Kyocera Corporation**
**Kyoto-shi, Kyoto 612-8501 (JP)**

(72) Inventor: **YASUDA Keita**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **IMAGING LENS AND IMAGING DEVICE**

(57)     An imaging lens includes, in order from an object side, a first lens having negative refractive power; a second lens having negative refractive power; a third lens having positive refractive power; an aperture stop; a fourth lens having positive refractive power; a fifth lens having negative refractive power; and a sixth lens having positive refractive power. Letting curvature radius of an object-side surface of the first lens be R1; curvature radius of an image-side surface of the first lens be R2; temperature coefficient of refractive index of the fourth lens for d-line within a temperature range of 20°C to 40°C be dN4/dT; temperature coefficient of refractive index of the sixth lens for the d-line within the temperature range of 20°C to 40°C be dN6/dT; and focal length of the imaging lens for the d-line be f, the imaging lens satisfies conditional expressions:

$$0.6 < (R1 + R2)/(R1 - R2) < 0.8 \quad (1)$$

$$-1.1 < (dN4/dT + dN6/dT)/f < -0.7 \quad (2)$$

FIG. 1
EXAMPLE 1

EP 4 582 848 A1

**Description**

CROSS-REFERENCE TO RELATED APPLICATIONS

The present application claims priority to Japanese Patent Application No. 2022-136280 filed in Japan on August 29, 2022, Japanese Patent Application No. 2022-136287 filed in Japan on August 29, 2022, Japanese Patent Application No. 2022-136291 filed in Japan on August 29, 2022, Japanese Patent Application No. 2022-136294 filed in Japan on August 29, 2022, and Japanese Patent Application No. 2022-136302 filed in Japan on August 29, 2022. The disclosure of these applications are incorporated herein by reference in their entirety.

TECHNICAL FIELD

The present disclosure relates to an imaging lens and an imaging apparatus.

BACKGROUND OF INVENTION

Imaging lenses intended for cameras such as monitoring cameras and onboard cameras are desired to resist environmental changes and exhibit favorable focusing performance over the entirety of screens. The imaging lenses are also desired to be of small size and light weight because, for example, installation spaces provided in cameras for the installation of the imaging lenses tend to be limited.
Technologies disclosed in Patent Literature 1 and 2 are each proposed as a single-focus imaging lens that meets the above desires. An exemplary lens unit disclosed in Patent Literature 1 is favorably usable even in a harsh environment with a wide temperature range required, and exhibits high accuracy in correction of chromatic aberration. An exemplary lens unit disclosed in Patent Literature 2 is usable over a wide temperature range and a wide wavelength band, and is excellent in terms of compactness.

CITATION LIST

PATENT LITERATURE

Patent Literature 1: Japanese Unexamined Patent Application Publication No. 2008-008960
Patent Literature 2: Japanese Unexamined Patent Application Publication No. 2013-047753

SUMMARY

In an embodiment of the present disclosure, an imaging lens is an imaging lens including, in order from an object side, a first lens, a second lens, a third lens, an aperture stop, a fourth lens, a fifth lens, and a sixth lens. The first lens has negative refractive power. The second lens has negative refractive power. The third lens has positive refractive power. The fourth lens has positive refractive power. The fifth lens has negative refractive power. The sixth lens has positive refractive power. Letting curvature radius of an object-side surface of the first lens be R1; curvature radius of an image-side surface of the first lens be R2; temperature coefficient of refractive index of the fourth lens for d-line within a temperature range of 20°C to 40°C be dN4/dT; temperature coefficient of refractive index of the sixth lens for the d-line within the temperature range of 20°C to 40°C be dN6/dT; and focal length of the imaging lens for the d-line be f, the imaging lens satisfies conditional expressions:

$$0.6 < (R1 + R2)/(R1 - R2) < 0.8 \quad (1)$$

$$-1.1 < (dN4/dT + dN6/dT)/f < -0.7 \quad (2)$$

In an embodiment of the present disclosure, an imaging apparatus includes an imaging lens and an imaging device. The imaging lens includes, in order from an object side, a first lens, a second lens, a third lens, an aperture stop, a fourth lens, a fifth lens, and a sixth lens. The first lens has negative refractive power. The second lens has negative refractive power. The third lens has positive refractive power. The fourth lens has positive refractive power. The fifth lens has negative refractive power. The sixth lens has positive refractive power. The imaging device is configured to convert an optical image into an electric signal. The optical image is focused through the imaging lens. Letting curvature radius of an object-side surface of the first lens be R1; curvature radius of an image-side surface of the first lens be R2; temperature coefficient of refractive index of the fourth lens for d-line within a temperature range of 20°C to 40°C be dN4/dT; temperature coefficient of refractive index of the sixth lens for the d-line within the temperature range of 20°C to 40°C be dN6/dT; and focal length of the imaging lens for the d-line be f, the imaging apparatus satisfies conditional expressions:

$$0.6 < (R1 + R2)/(R1 - R2) < 0.8 \quad (43)$$

$$-1.1 < (dN4/dT + dN6/dT)/f < -0.7 \quad (44)$$

In an embodiment of the present disclosure, an imaging apparatus includes an imaging lens and an imaging device. The imaging lens includes, in order from an object side, a first lens, a second lens, a third lens, an aperture stop, a fourth lens, a fifth lens, and a sixth lens. The first lens has negative refractive power. The second lens has negative refractive power. The third lens has positive refractive power. The fourth lens has positive refractive power. The fifth lens has negative refractive power. The sixth lens has positive refractive power. The imaging device is configured to convert an optical image into an electric signal. The optical image is focused through the imaging lens. Letting on-axis distance from an image-side surface of the second lens to an object-side surface of the third lens be D4; focal length of the imaging lens for d-line be f; and on-axis thickness of the second lens be D3, the imaging apparatus satisfies conditional expressions:

$$D4/f < 0.08 \quad (45)$$

$$0.12 < D3/f < 0.23 \quad (46)$$

In an embodiment of the present disclosure, an imaging apparatus includes an imaging lens and an imaging device. The imaging lens includes, in order from an object side, a first lens, a second lens, a third lens, an aperture stop, a fourth lens, a fifth lens, and a sixth lens. The first lens has negative refractive power. The second lens has negative refractive power. The third lens has positive refractive power. The fourth lens has positive refractive power. The fifth lens has negative refractive power. The sixth lens has positive refractive power. The imaging device is configured to convert an optical image into an electric signal. The optical image is focused through the imaging lens. Letting curvature radius of an object-side surface of the second lens be R3; focal length of the imaging lens for d-line be f; curvature radius of an object-side surface of the third lens be R5; and curvature radius of an image-side surface of the third lens be R6, the imaging apparatus satisfies conditional expressions:

$$-2.2 < R3/f < -1.2 \quad (47)$$

$$-0.15 < (R5 + R6)/(R5 - R6) < 0.15 \quad (48)$$

In an embodiment of the present disclosure, an imaging apparatus includes an imaging lens and an imaging device. The imaging lens includes, in order from an object side, a first lens, a second lens, a third lens, an aperture stop, a fourth lens, a fifth lens, and a sixth lens. The first lens has negative refractive power. The second lens has negative refractive power. The third lens has positive refractive power. The fourth lens has positive refractive power. The fifth lens has negative refractive power. The sixth lens has positive refractive power. The imaging device is configured to convert an optical image into an electric signal. The optical image is focused through the imaging lens. Letting synthetic focal length of the fourth lens, the fifth lens, and the sixth lens for d-line be fg; focal length of the imaging lens for the d-line be f; and refractive index of the fifth lens be N5, the imaging apparatus satisfies conditional expressions:

$$1.4 < fg/f < 1.8 \quad (49)$$

$$0.35 < N5/f \quad (50)$$

In an embodiment of the present disclosure, an imaging apparatus includes an imaging lens and an imaging device. The imaging lens includes, in order from an object side, a first lens, a second lens, a third lens, an aperture stop, a fourth lens, a fifth lens, and a sixth lens. The first lens has negative refractive power. The second lens has negative refractive power. The third lens has positive refractive power. The fourth lens has positive refractive power. The fifth lens has negative refractive power. The sixth lens has positive refractive power. The imaging device is configured to convert an optical image into an electric signal. The optical image is focused through the imaging lens. Letting curvature radius of an object-side surface of the sixth lens be R11; curvature radius of an image-side surface of the sixth lens be R12; Abbe number of the fourth lens be v4; and focal length of the imaging lens for d-line be f, the imaging apparatus satisfies conditional expressions:

$$0.05 < (R11 + R12)/(R11 - R12) < 0.7 \quad (51)$$

$$12 < v4/f \quad (52)$$

Furthermore, two surfaces of the second lens are each a concave surface.

BRIEF DESCRIPTION OF THE DRAWINGS

FIG. 1 is a diagram illustrating a lens configuration of an imaging lens according to Example 1 of the present disclosure.

FIG. 2A is a graph illustrating astigmatism of the imaging lens illustrated in FIG. 1.

FIG. 2B is a graph illustrating distortion of the imaging lens illustrated in FIG. 1.

FIG. 3 is a diagram illustrating a lens configuration of an imaging lens according to Example 2 of the present disclosure.

FIG. 4A is a graph illustrating astigmatism of the imaging lens illustrated in FIG. 3.

FIG. 4B is a graph illustrating distortion of the imaging lens illustrated in FIG. 3.

FIG. 5 is a diagram illustrating a lens configuration of an imaging lens according to Example 3 of the present disclosure.

FIG. 6A is a graph illustrating astigmatism of the imaging lens illustrated in FIG. 5.

FIG. 6B is a graph illustrating distortion of the imaging lens illustrated in FIG. 5.

FIG. 7 is a diagram illustrating a lens configuration of an imaging lens according to Example 4 of the present disclosure.

FIG. 8A is a graph illustrating astigmatism of the imaging lens illustrated in FIG. 7.

FIG. 8B is a graph illustrating distortion of the imaging lens illustrated in FIG. 7.

FIG. 9 is a diagram illustrating a lens configuration of an imaging lens according to Example 5 of the present disclosure.

FIG. 10A is a graph illustrating astigmatism of the imaging lens illustrated in FIG. 9.

FIG. 10B is a graph illustrating distortion of the imaging lens illustrated in FIG. 9.

FIG. 11 is a diagram illustrating a lens configuration of an imaging lens according to Example 6 of the present disclosure.

FIG. 12A is a graph illustrating astigmatism of the imaging lens illustrated in FIG. 11.

FIG. 12B is a graph illustrating distortion of the imaging lens illustrated in FIG. 11.

FIG. 13 is a diagram illustrating a lens configuration of an imaging lens according to Example 7 of the present disclosure.

FIG. 14A is a graph illustrating astigmatism of the imaging lens illustrated in FIG. 13.

FIG. 14B is a graph illustrating distortion of the imaging lens illustrated in FIG. 13.

FIG. 15 is a diagram illustrating a lens configuration of an imaging lens according to Example 8 of the present disclosure.

FIG. 16A is a graph illustrating astigmatism of the imaging lens illustrated in FIG. 15.

FIG. 16B is a graph illustrating distortion of the imaging lens illustrated in FIG. 15.

FIG. 17 is a diagram illustrating a lens configuration of an imaging lens according to Example 9 of the present disclosure.

FIG. 18A is a graph illustrating astigmatism of the imaging lens illustrated in FIG. 17.

FIG. 18B is a graph illustrating distortion of the imaging lens illustrated in FIG. 17.

DESCRIPTION OF EMBODIMENTS

Onboard cameras, for example, have come to be used not only for conventional purposes of visual recognition but also for sensing purposes of detecting objects, leading to a demand for higher performance. With increasing resolutions of solid-state imaging devices such as CCDs (charge coupled devices) and CMOSs (complementary metal-oxide semiconductor), imaging lenses to be included in cameras are desired to exhibit correspondingly favorable optical performance.

An embodiment of the present disclosure can provide an imaging lens and an imaging apparatus each having a six-lens configuration for compactness, lightness, and inexpensiveness but exhibiting high optical performance with appropriately set lens shapes.

An imaging lens 10 and an imaging apparatus 1 according to an embodiment of the present disclosure will now be described in detail with reference to the accompanying drawings. More specifically, configurations and functions of the imaging lens 10 and the imaging apparatus 1 that are common to examples to be given below will be described. In each of the accompanying drawings illustrating the configurations of the imaging lens 10 and the imaging apparatus 1, "object side" corresponds to left side, and "image side" corresponds to right side. The drawings to be referred to in the following description are schematic. Dimensional proportions and the like in the drawings are not necessarily the same as actual ones.

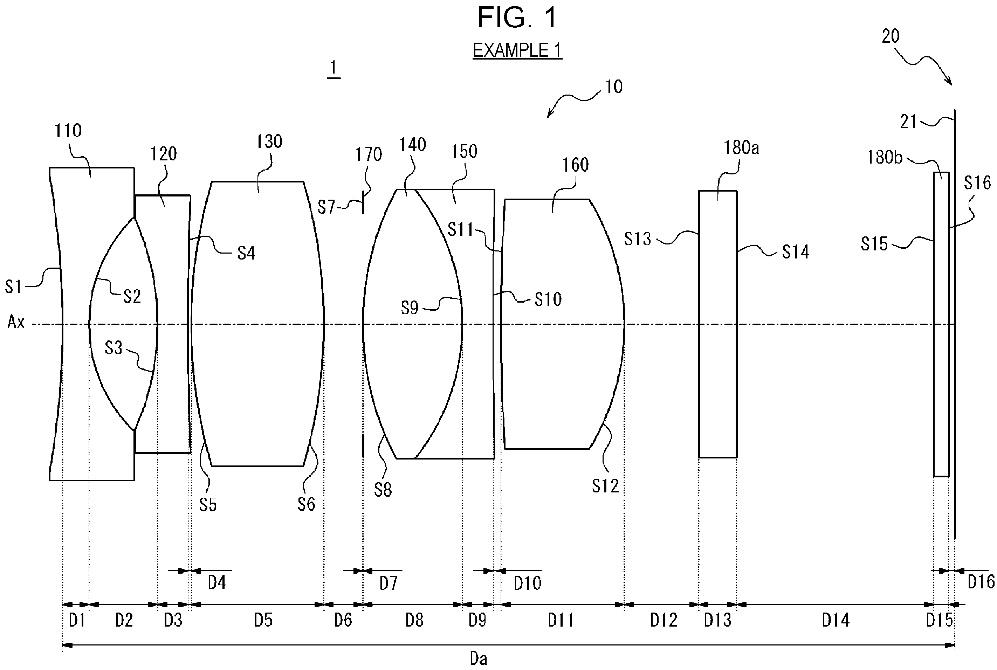

A lens configuration of an imaging lens 10 and an imaging apparatus 1 according to an embodiment will mainly be described with reference to the below-described FIG. 1, which illustrates a configuration of an imaging lens 10 and an imaging apparatus 1 according to Example 1.

The imaging apparatus 1 includes the imaging lens 10 and an imaging device 20. The imaging device 20 is configured to convert an optical image into an electric signal. The optical image is focused through the imaging lens 10. The imaging device 20 includes a solid-state imaging device such as a CCD and a CMOS. The imaging device 20 includes a surface serving as an image plane 21. The imaging apparatus 1 is configured to focus an image of an object, regarded as a subject, on the image plane 21 of the imaging device 20 through the imaging lens 10, thereby taking an image of the subject.

The imaging lens 10 includes a first lens 110, a second lens 120, a third lens 130, an aperture stop 170, a fourth lens 140, a fifth lens 150, a sixth lens 160, a first flat plate 180a, and a second flat plate 180b, which are arranged in that order from the object side. The fourth lens 140 and the fifth lens 150 are combined as a cemented lens. The imaging lens 10 is a six-lens, single-focus imaging lens. Each of the first lens 110, the second lens 120, the third lens 130, the fourth lens 140, the fifth lens 150, and the sixth lens 160 is made of a glass material.

The first lens 110 has a spherical shape. Two surfaces of the first lens 110 are each a concave surface. The second lens 120 has a spherical shape. Two surfaces of the second lens 120 are each a concave surface. The third lens 130 has a spherical shape. Two surfaces of the third lens 130 are each a convex surface. The fourth lens 140 has a spherical shape. Two surfaces of the fourth lens 140 are each a convex surface. The fifth lens 150 has a spherical shape. Two surfaces of the fifth lens 150 are each a concave surface. Two surfaces of the sixth lens 160 are each an aspherical surface. The first flat plate 180a includes an optical member such as an IR (infrared) cut filter. The second flat plate 180b includes an optical member such as LID glass provided to the imaging device 20. LID glass is a cover glass intended for the imaging device 20, which serves as an image sensor.

The imaging lens 10 substantially consists of the first lens 110, the second lens 120, the third lens 130, the fourth lens 140, the fifth lens 150, and the sixth lens 160. In the present disclosure, "substantially consist of" refers to an idea that although optical elements substantially constituting the imaging lens 10 are the six lenses of the first lens 110 to the sixth lens 160, the imaging lens 10 may further include a lens having substantially no power; optical elements other than lenses, such as a stop and a cover glass; and so forth. For example, the imaging lens 10 includes the aperture stop 170 and the first flat plate 180a and the second flat plate 180b, in addition to the first lens 110 to the sixth lens 160.

The imaging lens 10 includes, in order from the object side, the first lens 110, which has negative refractive power; the second lens 120, which has negative refractive power; the third lens 130, which has positive refractive power; the aperture stop 170; the fourth lens 140, which has positive refractive power; the fifth lens 150, which has negative refractive power; and the sixth lens 160, which has positive refractive power.

If the imaging lens 10 is of wide angle, focal length needs to be set short to obtain a wide angle of view, whereas back focus needs to be set longer than focal length because of mechanical restrictions on the imaging lens 10. Accordingly, lenses each having negative refractive power are provided on a front side in the imaging lens 10, whereby light entering the imaging lens 10 from the object side is first diverged, and is condensed by lenses provided on a rear side and each having positive refractive power. Thus, a lens system with a principal point appearing on the rear side relative to the imaging lens 10 is obtained, and a back focus longer than the focal length can be assuredly provided.

More specifically, the first lens 110 and the second lens 120 each having negative refractive power diverge the light, and the third lens 130, the fourth lens 140, and the sixth lens 160 each having positive refractive power condense the light. Providing the first lens 110 and the second lens 120 each being a negative lens at an extreme end on the object side in the imaging lens 10 can generate negative refractive power that is high enough to set the principal point on the rear side. Providing the third lens 130 having positive refractive power on the front side relative to the aperture stop 170 enables favorable correction of lateral chromatic aberration. Providing the fourth lens 140 and the sixth lens 160 each having positive refractive power on the rear side relative to the aperture stop 170 reduces angle of incidence of the light on the image plane 21 and enables favorable correction of aberrations.

The aperture stop 170 is provided between the third lens 130 and the fourth lens 140. If the aperture stop 170 is provided on the image side relative to the fourth lens 140, the imaging lens 10 becomes large, unfavorably. If the aperture stop 170 is provided on the object side relative to the third lens 130, the imaging lens 10 becomes difficult to have a wide angle of view, unfavorably. That is, providing the aperture stop 170 between the third lens 130 and the fourth lens 140 described above allows the imaging lens 10 to realize favorable correction of aberrations and a compact lens system.

Functions of an imaging lens 10 and an imaging apparatus 1 according to an embodiment will mainly be described.

The imaging lens 10 satisfies Conditional Expressions (1) and (2) below:

$$0.6 < (R1 + R2)/(R1 - R2) < 0.8 \quad (1)$$

$$-1.1 < (dN4/dT + dN6/dT)/f < -0.7 \quad (2)$$

where R1 denotes curvature radius of an object-side surface of the first lens 110, R2 denotes curvature radius of an image-side surface of the first lens 110, dN4/dT denotes temperature coefficient of refractive index of the fourth lens 140 for d-line (wavelength $\lambda$ = 587.56 nm) within a temperature range of 20°C to 40°C, dN6/dT denotes temperature coefficient of refractive index of the sixth lens 160 for the d-line within the temperature range of 20°C to 40°C, and f denotes focal length of the imaging lens 10 for the d-line.

Conditional Expression (1) associates the curvature radii of the two surfaces of the first lens 110 with each other. If (R1 + R2)/(R1 - R2) comes to a value equal to or greater than 0.8 defined as an upper limit, difference in curvature radius between the two concave surfaces of the first lens 110 becomes too large. Such a configuration makes astigmatism difficult to correct. If (R1 + R2)/(R1 - R2) comes to a value equal to or less than 0.6 defined as a lower limit, curvature radii of the two concave surfaces of the first lens 110 become too closely analogous to each other. Such a configuration causes significant field curvature. Satisfying Conditional Expression (1) facilitates correction of astigmatism and reduces occurrence of field curvature.

Conditional Expression (2) associates the temperature coefficient of refractive index of the fourth lens 140 and the temperature coefficient of refractive index of the sixth lens 160 with the focal length of the imaging lens 10. If (dN4/dT + dN6/dT)/f comes to a value equal to or greater than -0.7 defined as an upper limit, temperature coefficient of refractive index of convex lenses including the fourth lens 140 and the sixth lens 160 becomes too high. Such a configuration makes it difficult to reduce focus shift that occurs with a temperature change. If (dN4/dT + dN6/dT)/f comes to a value equal to or less than -1.1 defined as a lower limit, temperature coefficient of refractive index of the convex lenses including the fourth lens 140 and the sixth lens 160 becomes too low. Such a configuration leads to overcorrection instead of the above focus shift and a focus shift caused by the concave lenses of the imaging lens 10 canceling each other out, and makes it difficult to reduce focus shift. Satisfying Conditional Expression (2) facilitates reduction of the focus shift that occurs with a temperature change.

The imaging lens 10 may further satisfy Conditional Expression (3) below:

$$0.14 < D1/f \quad (3)$$

where D1 denotes on-axis thickness of the first lens 110. That is, D1 denotes distance from the object-side surface of the first lens 110 to the image-side surface of the first lens 110 on an optical axis Ax of the imaging lens 10 illustrated in FIG. 1.

Conditional Expression (3) associates the on-axis thickness of the first lens 110 and the focal length of the imaging lens 10 with each other. If D1/f comes to a value equal to or less than 0.14 defined as a lower limit, the on-axis thickness of the first lens 110 becomes too small. Such a configuration reduces the refractive power of the first lens 110 provided as a biconcave lens and makes astigmatism difficult to correct. Furthermore, the small on-axis thickness makes the first lens 110 difficult to process. Furthermore, a pressure applied from a retainer or the like retaining the first lens 110 may break the first lens 110. Satisfying Conditional Expression (3) facilitates correction of astigmatism and processing of the first lens 110, and lowers a probability that the retainer or the like may break the first lens 110.

The imaging lens 10 may further satisfy Conditional Expression (4) below:

$$-3.8 < f2/f < -2 \quad (4)$$

where f2 denotes focal length of the second lens 120 for the d-line.

Conditional Expression (4) associates the focal length of the second lens 120 and the focal length of the imaging lens 10 with each other. If f2/f comes to a value less than -2 defined as an upper limit, the refractive power of the second lens 120 provided as a concave lens appropriately decreases. Such a configuration leads to favorable correction of astigmatism. If f2/f comes to a value equal to or less than -3.8 defined as a lower limit, axial chromatic aberration that occurs in the second lens 120 decreases. Such a configuration makes it difficult to correct axial chromatic aberration of the imaging lens 10 as a whole. Satisfying Conditional Expression (4) facilitates correction of axial chromatic aberration of the imaging lens 10 as a whole.

In the imaging lens 10, since the two surfaces of the second lens 120 are each a concave surface, the second lens 120 can easily include a flat receiving portion with no additional processing performed on the second lens 120. The flat receiving portion allows the second lens 120 to be in contact with the first lens 110 and the spacer or the like at a flat surface. Therefore, a configuration with low tolerance sensitivity can be realized. As illustrated in FIG. 1, the flat receiving portion is an area that is located farthest from the optical axis Ax. The flat receiving portion is provided to the second lens 120 in areas where the first lens 110 and the second lens 120 are in contact with each other.

For example, if a surface of a lens has a convex shape, a flat receiving portion needs to be additionally formed in an area that is located at the outer periphery of the lens and farthest from the optical axis. If the convex lens includes no such a flat receiving portion, the position where the convex lens is received by a concave lens is unstable. Such a situation may displace the optical axis of the convex lens. Consequently, assembly tolerance for the convex lens to be incorporated into a lens system may be exceeded. It is not easy to perform processing of additionally forming a flat receiving portion at the outer periphery of a convex lens surface. Therefore, the flat receiving portion is desirably provided to the second lens 120, which includes a concave lens surface resulting from a normal processing.

The imaging lens 10 may further satisfy Conditional Expression (5) below:

$$0.36 < D2/f < 0.6 \quad (5)$$

where D2 denotes on-axis distance from the image-side surface of the first lens 110 to an object-side surface of the second lens 120. That is, D2 denotes distance from the image-side surface of the first lens 110 to the object-side surface of the second lens 120 on the optical axis Ax of the imaging lens 10 illustrated in FIG. 1.

Conditional Expression (5) associates the on-axis distance between the first lens 110 and the second lens 120, and the focal length of the imaging lens 10 with each other. If D2/f comes to a value less than 0.6 defined as an upper limit, optical-path difference produced between a position on the optical axis Ax and a position apart from the optical axis Ax decreases in an air lens existing between the first lens 110 and the second lens 120. Accordingly, occurrence of lateral chromatic aberration is reduced. If D2/f comes to a value equal to or less than 0.36 defined as a lower limit, interval between the first lens 110 and the second lens 120 becomes significantly short. Such a configuration makes spherical aberration difficult to correct. Satisfying Conditional Expression (5) facilitates correction of spherical aberration.

The imaging lens 10 may further satisfy Conditional Expression (6) below:

$$-6.7 < R1/f < -4.4 \quad (6)$$

Conditional Expression (6) associates the curvature radius of the object-side surface of the first lens 110 and the focal length of the imaging lens 10 with each other. If R1/f comes to a value equal to or greater than -4.4 defined as an upper limit, off-axis focal length becomes too long. Such a configuration leads to a difficulty in correction and causes field curvature. If R1/f comes to a value equal to or less than -6.7 defined as a lower limit, off-axis refractive power becomes too high. Such a configuration leads to overcorrection and causes field curvature on the negative side. Satisfying Conditional Expression (6) reduces occurrence of field curvature.

The imaging lens 10 may further satisfy Conditional Expression (7) below:

$$4.7 < v3/f < 5.7 \quad (7)$$

where v3 denotes Abbe number of the third lens 130.

Conditional Expression (7) associates the Abbe number of the third lens 130 and the focal length of the imaging lens 10 with each other. If v3/f comes to a value equal to or greater than 5.7 defined as an upper limit, the Abbe number of the third lens 130 provided as a convex lens located on the object side relative to the aperture stop 170 becomes large. Such a configuration causes significant lateral chromatic aberration. Satisfying Conditional Expression (7) reduces occurrence of lateral chromatic aberration. If v3/f comes to a value greater than 4.7 defined as a lower limit, axial chromatic aberration caused by the third lens 130 provided as a convex lens decreases. Such a configuration enables correction of axial chromatic aberration of the imaging lens 10 as a whole.

The imaging lens 10 may further satisfy Conditional Expression (8) below:

$$N1/f < 0.34 \quad (8)$$

where N1 denotes refractive index of the first lens 110.

Conditional Expression (8) associates the refractive index of the first lens 110 and the focal length of the imaging lens 10 with each other. If N1/f comes to a value equal to or greater than 0.34 defined as an upper limit, the refractive power of the first lens 110 becomes high. Such a configuration makes, for example, the refractive power at a middle image height pronounced. Accordingly, significant spherical aberration occurs. Satisfying Conditional Expression (8) reduces occurrence of spherical aberration.

In the imaging lens 10, since the object-side surface of the first lens 110 is a concave surface, a structure to be held with a retainer or the like can be formed easily with no additional processing performed on the first lens 110. Furthermore, when light that has entered the imaging lens 10 and reflected by the image plane 21 is incident on the object-side surface of the first lens 110, re-reflection of the light tends to be diverged instead of being condensed. Such a configuration can reduce a probability that the above re-reflection may be re-focused on the image plane 21 to cause ghost.

The imaging lens 10 may further satisfy Conditional Expression (9) below:

$$Da/f < 5.2 \quad (9)$$

where Da denotes total length of the imaging lens 10 on the optical axis Ax. That is, Da denotes distance from the object-side surface of the first lens 110 to the image plane 21 on the optical axis Ax of the imaging lens 10 illustrated in FIG. 1.

Conditional Expression (9) associates the total length of the imaging lens 10 and the focal length of the imaging lens 10 with each other. If Da/f comes to a value less than 5.2 defined as an upper limit, optical-path ratio produced between a position on the optical axis Ax and a position apart from the optical axis Ax becomes high in each air lens. Such a configuration reduces astigmatism. Such a situation further leads to reduction in the size of the imaging lens 10 in a total-length direction and in a radial direction. Therefore, the degree of freedom in designing a camera housing increases.

The imaging lens 10 may further satisfy Conditional Expression (10) below:

$$-1.5 < f1/f < -1.2 \quad (10)$$

where f1 denotes focal length of the first lens 110 for the d-line.

Conditional Expression (10) associates the focal length of the first lens 110 and the focal length of the imaging lens 10 with each other. If f1/f comes to a value equal to or greater than -1.2 defined as an upper limit, the refractive power of the first lens 110 provided as a concave lens in the imaging lens 10 becomes too high. Such a configuration causes significant field curvature. Satisfying Conditional Expression (10) reduces occurrence of field curvature. If f1/f comes to a value greater than -1.5 defined as a lower limit, the refractive power of the first lens 110 is prevented from becoming too low. Such a configuration enables favorable correction of axial chromatic aberration.

The imaging lens 10 may further satisfy Conditional Expression (11) below:

$$1.6 < f3/f < 3.1 \quad (11)$$

where f3 denotes focal length of the third lens 130 for the d-line.

Conditional Expression (11) associates the focal length of the third lens 130 and the focal length of the imaging lens 10 with each other. If f3/f comes to a value equal to or greater than 3.1 defined as an upper limit, the refractive power of the third lens 130 provided as a convex lens located on the front side relative to the aperture stop 170 becomes low. Such a configuration causes field curvature. If f3/f comes to a value equal to or less than 1.6 defined as a lower limit, the refractive power of the third lens 130 provided as a convex lens in the imaging lens 10 becomes too high. Such a configuration makes axial chromatic aberration that occurs in the convex lens difficult to correct. Satisfying Conditional Expression (11) reduces occurrence of field curvature and facilitates correction of axial chromatic aberration that occurs in the convex lens.

In the imaging lens 10, the fourth lens 140 and the fifth lens 150 are combined as a cemented lens. That is, the fourth lens 140 and the fifth lens 150, which are highly sensitive to axial displacement, are combined as a cemented lens. Such a configuration can realize an optical system having low tolerance sensitivity. Furthermore, employing the cemented lens reduces the number of lenses constituting the imaging lens 10, and thus can reduce workload for assembling the imaging lens 10.

In the imaging lens 10, the two surfaces of the sixth lens 160 are each an aspherical surface. That is, the sixth lens 160, which is located closest to the image plane 21, has an aspherical shape. Such a configuration enables easy adjustment of angle of incidence of light on the imaging device 20. Consequently, correction of spherical aberration and astigmatism is facilitated.

The imaging lens 10 may further satisfy Conditional Expression (12) below:

$$1.45 < f6/f < 1.8 \quad (12)$$

where f6 denotes focal length of the sixth lens 160 for the d-line.

Conditional Expression (12) associates the focal length of the sixth lens 160 and the focal length of the imaging lens 10 with each other. If f6/f comes to a value equal to or greater than 1.8 defined as an upper limit, the refractive power of the sixth lens 160 provided as a convex lens located closest to the image plane 21 becomes low. Such a configuration tilts the image plane 21 toward the object side and makes field curvature difficult to correct. Satisfying Conditional Expression (12) facilitates correction of field curvature. If f6/f comes to a value greater than 1.45 defined as a lower limit, the refractive power of the sixth lens 160 is prevented from becoming too high. Such a configuration enables reduction in tolerance sensitivity. Accordingly, the image plane 21 is prevented from tilting toward the image side, and correction of field curvature is facilitated.

In the imaging lens 10, each of the first lens 110, the second lens 120, the third lens 130, the fourth lens 140, the fifth lens 150, and the sixth lens 160 is made of a glass material. Such a configuration can reduce yellowing due to ultraviolet light, changes in optical characteristics due to temperature changes, and the like.

The imaging lens 10 may further satisfy Conditional Expression (13) below:

$$48 < W \quad (13)$$

where W denotes half-angle of view of a ray that is incident on the image plane 21 at a maximum image-height position.

Conditional Expression (13) relates to the angle of view of the imaging lens 10 as a whole. If W comes to a value equal to or less than 48 defined as a lower limit, it is difficult to assuredly provide an imaging area to be satisfied by the imaging apparatus 1 intended for, for example, onboard cameras. Satisfying Conditional Expression (13) facilitates assured provision of the imaging area to be satisfied by the imaging apparatus 1 intended for, for example, onboard cameras.

The imaging lens 10 may further satisfy Conditional Expression (14) below:

$$-2.0 < f5/f < -1.1 \quad (14)$$

where f5 denotes focal length of the fifth lens 150 for the d-line.

Conditional Expression (14) associates the focal length of the fifth lens 150 and the focal length of the imaging lens 10 with each other. If f5/f comes to a value equal to or greater than -1.1 defined as an upper limit, the refractive power of the fifth lens 150 becomes high. Such a configuration makes the fifth lens 150 provided as a concave lens located on the image side relative to the aperture stop 170 cause significant lateral chromatic aberration in an opposite direction. If f5/f comes to a value equal to or less than -2.0 defined as a lower limit, the refractive power of the negative fifth lens 150 intended to cancel out the axial chromatic aberration occurred in the positive fourth lens 140 becomes low. Such a configuration makes the axial chromatic aberration difficult to correct. Satisfying Conditional Expression (14) reduces occurrence of lateral chromatic aberration in the opposite direction and facilitates correction of axial chromatic aberration.

The imaging lens 10 may further satisfy Conditional Expression (15) below:

$$1.2 < f4/f < 1.8 \quad (15)$$

where f4 denotes focal length of the fourth lens 140 for the d-line.

Conditional Expression (15) associates the focal length of the fourth lens 140 and the focal length of the imaging lens 10 with each other. If f4/f comes to a value equal to or greater than 1.8 defined as an upper limit, the refractive power of the fourth lens 140 provided as a convex lens becomes low. Such a configuration tilts the image plane 21 toward the image side and makes field curvature difficult to correct. If f4/f comes to a value equal to or less than 1.2 defined as a lower limit, the refractive power of the positive fourth lens 140 becomes too high. Such a configuration makes axial chromatic aberration difficult to correct with the negative fifth lens 150. Satisfying Conditional Expression (15) facilitates correction of field curvature and also facilitates correction of the axial chromatic aberration with the negative fifth lens 150.

The imaging lens 10 may further satisfy Conditional Expressions (16) and (17) below:

$$D4/f < 0.08 \quad (16)$$

$$0.12 < D3/f < 0.23 \quad (17)$$

where D4 denotes on-axis distance from an image-side surface of the second lens 120 to an object-side surface of the third lens 130. That is, D4 denotes distance from the image-side surface of the second lens 120 to the object-side surface of the third lens 130 on the optical axis Ax of the imaging lens 10 illustrated in FIG. 1. Furthermore, f denotes focal length of the imaging lens 10 for the d-line (wavelength $\lambda$ = 587.56 nm). Furthermore, D3 denotes on-axis thickness of the second lens 120. That is, D3 denotes distance from the object-side surface of the second lens 120 to the image-side surface of the second lens 120 on the optical axis Ax of the imaging lens 10 illustrated in FIG. 1.

Conditional Expression (16) associates the on-axis distance between the second lens 120 and the third lens 130 and the focal length of the imaging lens 10 with each other. If D4/f comes to a value equal to or greater than 0.08 defined as an upper limit, the interval between a negative lens group consisting of the first lens 110 and the second lens 120 and a positive lens group consisting of the third lens 130 to the sixth lens 160 becomes too large. Such a situation makes axial chromatic aberration difficult to correct. Satisfying Conditional Expression (16) facilitates correction of axial chromatic aberration.

Conditional Expression (17) associates the on-axis thickness of the second lens 120 and the focal length of the imaging lens 10 with each other. If D3/f comes to a value equal to or less than 0.12 defined as a lower limit, the refractive power of the second lens 120 provided as a concave lens becomes low. Such a configuration causes field curvature. If D3/f comes to a value equal to or greater than 0.23 defined as an upper limit, optical path of light that is transmitted through the second lens 120 becomes long. Such a configuration causes significant axial chromatic aberration. Satisfying Conditional Expression (17) reduces occurrence of field curvature and occurrence of axial chromatic aberration.

The imaging lens 10 may further satisfy Conditional Expression (18) below:

$$N2/f < 0.33 \quad (18)$$

where N2 denotes refractive index of the second lens 120.

Conditional Expression (18) associates the refractive index of the second lens 120 and the focal length of the imaging lens 10 with each other. If N2/f comes to a value equal to or greater than 0.33 defined as an upper limit, the refractive power of the second lens 120 provided as a concave lens becomes too high. Such a configuration tilts the image plane 21 toward the image side. Satisfying Conditional Expression (18) reduces tilting of the image plane 21 toward the image side.

The imaging lens 10 may further satisfy Conditional Expression (19) below:

$$-1 < (R3 + R4)/(R3 - R4) < -0.82 \quad (19)$$

where R3 denotes curvature radius of the object-side surface of the second lens 120, and R4 denotes curvature radius of the image-side surface of the second lens 120.

Conditional Expression (19) associates the curvature radii of the two surfaces of the second lens 120 with each other. If (R3 + R4)/(R3 - R4) comes to a value equal to or less than -1 defined as a lower limit, difference in absolute value between the curvature radii of the two concave surfaces of the second lens 120 becomes large. Such a configuration causes astigmatism. If (R3 + R4)/(R3 - R4) comes to a value equal to or greater than -0.82 defined as an upper limit, difference in absolute value between the curvature radii of the two concave surfaces of the second lens 120 becomes small. Such a configuration makes axial chromatic aberration difficult to correct. Satisfying Conditional Expression (19) facilitates correction of axial chromatic aberration and reduces occurrence of astigmatism.

The imaging lens 10 may further satisfy Conditional Expression (20) below:

$$0.77 < R2/f < 0.9 \quad (20)$$

where R2 denotes curvature radius of the image-side surface of the first lens 110.

Conditional Expression (20) associates the curvature radius of the image-side surface of the first lens 110 and the focal length of the imaging lens 10 with each other. If R2/f comes to a value equal to or greater than 0.9 defined as an upper limit, condensation of light with the first lens 110 provided as a concave lens located at the extreme end on the object side becomes difficult. Such a configuration causes spherical aberration. If R2/f comes to a value equal to or less than 0.77 defined as a lower limit, the first lens 110 comes to have a shape that is difficult to manufacture. Furthermore, the refractive power of the first lens 110 provided as a concave lens becomes too high. Such a configuration tilts the image plane 21 toward the image side. Satisfying Conditional Expression (20) reduces occurrence of spherical aberration and tilting of the image plane 21 toward the image side.

The imaging lens 10 may further satisfy Conditional Expression (21) below:

$$4.8 < v5/f < 5.5 \quad (21)$$

where v5 denotes Abbe number of the fifth lens 150.

Conditional Expression (21) associates the Abbe number of the fifth lens 150 and the focal length of the imaging lens 10 with each other. If v5/f comes to a value equal to or greater than 5.5 defined as an upper limit, occurrence of axial chromatic aberration in the fifth lens 150 provided as a concave lens is reduced. Such a configuration makes the optical system as a whole difficult to correct. If v5/f comes to a value equal to or less than 4.8 defined as a lower limit, axial chromatic aberration occurs significantly, in contrast, leading to overcorrection. Satisfying Conditional Expression (21) enables correction of axial chromatic aberration in the optical system as a whole.

The imaging lens 10 may further satisfy Conditional Expression (22) below:

$$1.4 < fg/f < 1.8 \quad (22)$$

where fg denotes synthetic focal length of the fourth lens 140, the fifth lens 150, and the sixth lens 160 for the d-line.

Conditional Expression (22) associates the synthetic focal length of the fourth lens 140 to the sixth lens 160 and the focal length of the imaging lens 10 with each other. If fg/f comes to a value equal to or greater than 1.8 defined as an upper limit, condensation of light with the fourth lens 140, the fifth lens 150, and the sixth lens 160 that are located on the image side relative to the aperture stop 170 becomes difficult. Such a configuration causes astigmatism. If fg/f comes to a value equal to or less than 1.4 defined as a lower limit, condensation of light is facilitated. Instead, the refractive power of a lens group located on the image side relative to the aperture stop 170 becomes too high. Such a configuration causes the image plane 21 in the meridional direction to tilt toward the object side. Satisfying Conditional Expression (22) reduces occurrence of astigmatism and tilting of the image plane 21 in the meridional direction toward the object side.

The imaging lens 10 may further satisfy Conditional Expressions (23) and (24) below:

$$-2.2 < R3/f < -1.2 \quad (23)$$

$$-0.15 < (R5 + R6)/(R5 - R6) < 0.15 \quad (24)$$

where R3 denotes curvature radius of the object-side surface of the second lens 120, f denotes focal length of the imaging lens 10 for the d-line, R5 denotes curvature radius of the object-side surface of the third lens 130, and R6 denotes curvature radius of an image-side surface of the third lens 130.

Conditional Expression (23) associates the curvature radius of the object-side surface of the second lens 120 and the focal length of the imaging lens 10 with each other. The object-side surface of the second lens 120 plays a role of further refracting light condensed by the first lens 110. If R3/f comes to a value equal to or greater than -1.2 defined as an upper limit, the refractive power of the object-side surface of the second lens 120 becomes too high. Such a configuration causes significant astigmatism. If R3/f comes to a value equal to or less than - 2.2 defined as a lower limit, the refractive power of the object-side surface of the second lens 120 becomes low. Such a configuration causes significant field curvature. Satisfying Conditional Expression (23) reduces occurrence of astigmatism and occurrence of field curvature.

Conditional Expression (24) associates the curvature radii of the two surfaces of the third lens 130 with each other. If (R5 + R6)/(R5 - R6) comes to a value equal to or greater than 0.15 defined as an upper limit, the curvature radius of the object-side surface of the third lens 130 becomes greater than the curvature radius of the image-side surface of the third lens 130. Such a configuration causes significant field curvature. Satisfying Conditional Expression (24) reduces occurrence of field curvature. If (R5 + R6)/(R5 - R6) comes to a value greater than -0.15 defined as a lower limit, the curvature radius of the image-side surface of the third lens 130 becomes greater than the curvature radius of the object-side surface of the third lens 130. Such a configuration enables correction of astigmatism.

The imaging lens 10 may further satisfy Conditional Expression (25) below:

$$D5/f < 0.75 \quad (25)$$

where D5 denotes on-axis thickness of the third lens 130. That is, D5 denotes distance from the object-side surface of the third lens 130 to the image-side surface of the third lens 130 on the optical axis Ax of the imaging lens 10 illustrated in FIG. 1.

Conditional Expression (25) associates the on-axis thickness of the third lens 130 and the focal length of the imaging lens 10 with each other. If D5/f comes to a value equal to or greater than 0.75 defined as an upper limit, optical path of light that is transmitted through the third lens 130 provided as a convex lens located on the front side relative to the aperture stop 170 becomes long. Such a configuration causes significant lateral chromatic aberration. Satisfying Conditional Expression (25) reduces occurrence of lateral chromatic aberration.

The imaging lens 10 may further satisfy Conditional Expression (26) below:

$$0.03 < D6/f \quad (26)$$

where D6 denotes on-axis distance from the image-side surface of the third lens 130 to an object-side surface of the fourth lens 140. That is, D6 denotes distance from the image-side surface of the third lens 130 to the object-side surface of the fourth lens 140 on the optical axis Ax of the imaging lens 10 illustrated in FIG. 1.

Conditional Expression (26) associates the on-axis distance between the third lens 130 and the fourth lens 140 and the focal length of the imaging lens 10 with each other. If D6/f comes to a value equal to or less than 0.03 defined as a lower limit, a lens group located on the object side relative to the aperture stop 170 and having negative refractive power and a lens group located on the image side relative to the aperture stop 170 and having positive refractive power become too close to each other. Such a configuration causes significant axial chromatic aberration. Satisfying Conditional Expression (26) reduces occurrence of axial chromatic aberration.

The imaging lens 10 may further satisfy Conditional Expression (27) below:

$$10 < \nu1/f < 15 \quad (27)$$

where $\nu1$ denotes Abbe number of the first lens 110.

Conditional Expression (27) associates the Abbe number of the first lens 110 and the focal length of the imaging lens 10 with each other. If v1/f comes to a value equal to or greater than 15 defined as an upper limit, the negative lenses become far less effective over the entire optical system of the imaging lens 10. Such a configuration causes significant axial chromatic aberration. If $\nu1$/f comes to a value equal to or less than 10 defined as a lower limit, overcorrection occurs. Such a configuration causes significant axial chromatic aberration. Satisfying Conditional Expression (27) reduces occurrence of axial chromatic aberration.

The imaging lens 10 may further satisfy Conditional Expression (28) below:

$$N4/f < 0.4 \quad (28)$$

where N4 denotes refractive index of the fourth lens 140.

Conditional Expression (28) associates the refractive index of the fourth lens 140 and the focal length of the imaging lens 10 with each other. If N4/f comes to a value equal to or greater than 0.4 defined as an upper limit, the refractive index of the fourth lens 140 located on the rear side relative to the aperture stop 170 becomes too high. Such a configuration makes it difficult to provide a satisfactory back focus. Furthermore, the high refractive index of the fourth lens 140 provided as a convex lens causes field curvature. Satisfying Conditional Expression (28) facilitates provision of a satisfactory back focus and reduces occurrence of field curvature.

The imaging lens 10 may further satisfy Conditional Expression (29) below:

$$4.8 < \text{fg/f} \quad (29)$$

where fg denotes synthetic focal length of the fourth lens 140 and the fifth lens 150 for the d-line.

Conditional Expression (29) associates the synthetic focal length of the fourth lens 140 and the fifth lens 150 and the focal length of the imaging lens 10 with each other. If fg/f comes to a value equal to or less than 4.8 defined as a lower limit, the synthetic focal length of the fourth lens 140 as a convex lens and the fifth lens 150 as a concave lens that are located on the rear side relative to the aperture stop 170 becomes short. Such a configuration causes significant axial chromatic aberration. Satisfying Conditional Expression (29) reduces occurrence of axial chromatic aberration.

The imaging lens 10 may further satisfy Conditional Expressions (30) and (31) below:

$$1.4 < \text{fg/f} < 1.8 \quad (30)$$

$$0.35 < \text{N5/f} \quad (31)$$

where fg denotes synthetic focal length of the fourth lens 140, the fifth lens 150, and the sixth lens 160 for the d-line, f denotes focal length of the imaging lens 10 for the d-line, and N5 denotes refractive index of the fifth lens 150.

Conditional Expression (30) associates the synthetic focal length of the fourth lens 140 to the sixth lens 160 and the focal length of the imaging lens 10 with each other. If fg/f comes to a value equal to or greater than 1.8 defined as an upper limit, condensation of light with the fourth lens 140, the fifth lens 150, and the sixth lens 160 that are located on the image side relative to the aperture stop 170 becomes difficult. Such a configuration causes astigmatism. If fg/f comes to a value equal to or less than 1.4 defined as a lower limit, condensation of light is facilitated. Instead, the refractive power of a lens group located on the image side relative to the aperture stop 170 becomes too high. Such a configuration causes the image plane 21 in the meridional direction to tilt toward the object side. Satisfying Conditional Expression (30) reduces occurrence of astigmatism and tilting of the image plane 21 in the meridional direction toward the object side.

Conditional Expression (31) associates the refractive index of the fifth lens 150 and the focal length of the imaging lens 10 with each other. If N5/f comes to a value greater than 0.35 defined as a lower limit, the fifth lens 150 provided as a concave lens located on the rear side relative to the aperture stop 170 comes to have a satisfactory refractive power. Such a configuration enables correction of axial chromatic aberration.

The imaging lens 10 may further satisfy Conditional Expression (32) below:

$$-0.4 < (\text{R8} + \text{R9})/(\text{R8} - \text{R9}) < 0.25 \quad (32)$$

where R8 denotes curvature radius of the object-side surface of the fourth lens 140, and R9 denotes curvature radius of an image-side surface of the fourth lens 140.

Conditional Expression (32) associates the curvature radii of the two surfaces of the fourth lens 140 with each other. If (R8 + R9)/(R8 - R9) comes to a value equal to or greater than 0.25 defined as an upper limit, difference between the curvature radii of the front and back surfaces of the fourth lens 140 provided as a convex lens located near the aperture stop 170 becomes large. Such a configuration causes significant astigmatism. Satisfying Conditional Expression (32) reduces occurrence of astigmatism. If (R8 + R9)/(R8 - R9) comes to a value greater than -0.4 defined as a lower limit, axial chromatic aberration becomes easily correctable.

The imaging lens 10 may further satisfy Conditional Expression (33) below:

$$0.4 < \text{D8/f} < 0.7 \quad (33)$$

where D8 denotes on-axis thickness of the fourth lens 140. That is, D8 denotes distance from the object-side surface of the fourth lens 140 to the image-side surface of the fourth lens 140 on the optical axis Ax of the imaging lens 10 illustrated in FIG. 1.

Conditional Expression (33) associates the on-axis thickness of the fourth lens 140 and the focal length of the imaging lens 10 with each other. If D8/f comes to a value less than 0.7 defined as an upper limit, rays transmitted through the fourth lens 140, provided as a convex lens located near the aperture stop 170, and then traveling in the sagittal direction and in the meridional direction are appropriately refracted. Such a configuration reduces occurrence of astigmatism. If D8/f comes to a value equal to or less than 0.4 defined as a lower limit, the thickness of the fourth lens 140 becomes small. Such a configuration causes the image plane 21 in the meridional direction to curve. Satisfying Conditional Expression (33) makes the image plane 21 in the meridional direction less likely to curve.

The imaging lens 10 may further satisfy Conditional Expression (34) below:

$$0.015 < D10/f \quad (34)$$

where D10 denotes on-axis distance from an image-side surface of the fifth lens 150 to an object-side surface of the sixth lens 160. That is, D10 denotes distance from the image-side surface of the fifth lens 150 to the object-side surface of the sixth lens 160 on the optical axis Ax of the imaging lens 10 illustrated in FIG. 1.

Conditional Expression (34) associates the on-axis distance between the fifth lens 150 and the sixth lens 160 and the focal length of the imaging lens 10 with each other. If D10/f comes to a value greater than 0.015 defined as a lower limit, angles of incidence of rays that are incident on the image plane 21 are reduced.

The imaging lens 10 may further satisfy Conditional Expression (35) below:

$$R8/f < 1.9 \quad (35)$$

Conditional Expression (35) associates the curvature radius of the object-side surface of the fourth lens 140 and the focal length of the imaging lens 10 with each other. If R8/f comes to a value less than 1.9 defined as an upper limit, a restriction is imposed on the convex surface of the fourth lens 140 located on the rear side relative to the aperture stop 170. Such a configuration enables reduction in total optical length. Accordingly, occurrence of astigmatism is reduced.

The imaging lens 10 may further satisfy Conditional Expression (36) below:

$$11 < \nu2/f \quad (36)$$

where v2 denotes Abbe number of the second lens 120.

Conditional Expression (36) associates the Abbe number of the second lens 120 and the focal length of the imaging lens 10 with each other. If v2/f comes to a value greater than 11 defined as a lower limit, correction of lateral chromatic aberration is facilitated. Furthermore, an inexpensive material is to be selected. Such a situation facilitates cost reduction for the imaging lens 10.

The imaging lens 10 may further satisfy Conditional Expressions (37) and (38) below:

$$0.05 < (R11 + R12)/(R11 - R12) < 0.7 \quad (37)$$

$$12 < \nu4/f \quad (38)$$

where R11 denotes curvature radius of the object-side surface of the sixth lens 160, R12 denotes curvature radius of an image-side surface of the sixth lens 160, v4 denotes Abbe number of the fourth lens 140, and f denotes focal length of the imaging lens 10 for the d-line.

Conditional Expression (37) associates the curvature radii of the two surfaces of the sixth lens 160 with each other. If (R11 + R12)/(R12 - R12) comes to a value less than 0.7 defined as an upper limit, difference in absolute value between the curvature radii of the two surfaces of the sixth lens 160 provided as a convex lens located closest to the image plane 21 is prevented from becoming too large. Accordingly, correction of astigmatism is facilitated. If (R11 + R12)/(R12 - R12) comes to a value equal to or less than 0.05 defined as a lower limit, the difference in absolute value becomes small. Such a configuration causes field curvature for rays in the meridional direction. Satisfying Conditional Expression (37) reduces occurrence of field curvature.

Conditional Expression (38) associates the Abbe number of the fourth lens 140 and the focal length of the imaging lens 10 with each other. If v4/f comes to a value greater than 12 defined as a lower limit, axial chromatic aberration occurred in the fourth lens 140 is correctable with the fifth lens 150. Satisfying Conditional Expression (38) enables selection of an inexpensive material. Such a situation facilitates realization of cost reduction for the imaging lens 10.

The imaging lens 10 may further satisfy Conditional Expression (39) below:

$$0.4 < D11/f < 0.9 \quad (39)$$

where D11 denotes on-axis thickness of the sixth lens 160. That is, D11 denotes distance from the object-side surface of the sixth lens 160 to the image-side surface of the sixth lens 160 on the optical axis Ax of the imaging lens 10 illustrated in FIG. 1.

Conditional Expression (39) associates the on-axis thickness of the sixth lens 160 and the focal length of the imaging lens 10 with each other. If D11/f comes to a value less than 0.9 defined as an upper limit, the sixth lens 160 is prevented from becoming too thick. Such a configuration enables correction of lateral chromatic aberration. Furthermore, an appropriate thickness of the sixth lens 160 makes the sixth lens 160 have a shape easily incorporable into the imaging lens 10. If D11/f comes to a value greater than 0.4 defined as a lower limit, the refractive power of the sixth lens 160 is prevented from becoming too high. Such a configuration reduces occurrence of field curvature.

The imaging lens 10 may further satisfy Conditional Expression (40) below:

$$R12/f < -1.2 \quad (40)$$

Conditional Expression (40) associates the curvature radius of the image-side surface of the sixth lens 160 and the focal length of the imaging lens 10 with each other. If R12/f comes to a value less than -1.2 defined as an upper limit, the refractive power of the image-side surface of the sixth lens 160 is prevented from becoming too high. Such a configuration reduces the tolerance sensitivity. Furthermore, astigmatism becomes correctable appropriately.

The imaging lens 10 may further satisfy Conditional Expression (41) below:

$$N6/f < 0.4 \quad (41)$$

where N6 denotes refractive index of the sixth lens 160.

Conditional Expression (41) associates the refractive index of the sixth lens 160 and the focal length of the imaging lens 10 with each other. If N6/f comes to a value equal to or greater than 0.4 defined as an upper limit, the refractive index of the sixth lens 160 provided as a convex lens located closest to the image plane 21 becomes high. Such a configuration makes lateral chromatic aberration difficult to correct. Satisfying Conditional Expression (41) facilitates correction of lateral chromatic aberration. Furthermore, since the sixth lens 160 has an aspherical shape with an upper limit being set for the refractive index thereof, the material for the sixth lens 160 is selectable with a high degree of freedom.

The imaging lens 10 may further satisfy Conditional Expression (42) below:

$$1.7 < Db/f \quad (42)$$

where Db denotes back focus. That is, Db denotes distance from the image-side surface of the sixth lens 160 to the image plane 21 on the optical axis Ax of the imaging lens 10 illustrated in FIG. 1.

Conditional Expression (42) associates the back focus and the focal length of the imaging lens 10 with each other. If Db/f comes to a value equal to or less than 1.7 defined as a lower limit, optical members such as an IR cut filter and an LID glass become difficult to be incorporated into the imaging lens 10. Such a situation reduces ease of design of the optical system. Satisfying Conditional Expression (42) facilitates incorporation of optical members into the imaging lens 10 and facilitates the design of the optical system.

(EXAMPLES)

Now, lens configurations in examples of the imaging lens 10 according to the present disclosure will mainly be described. More specifically, Examples 1 to 9 of the imaging lens 10 that are based on specific numerical values will be provided. Examples 1 to 9 each exhibit the features described in the above embodiment, regarding the positive or negative refractive power of each of the lenses, the surface shape of each of the lenses, and the parameters used in Conditional Expressions (1) to (42).

Values for Examples 1 to 9 regarding the focal length f of the imaging lens 10 and the total length Da of the imaging lens 10 on the optical axis Ax that have been described above, and F-value and image height are summarized in Table 1 below. In pieces of data on the examples summarized in Table 1, values derived from lens specifications including the focal length f and so forth are for the d-line unless otherwise stated.

[Table 1]

| Example | 1 | 2 | 3 | 4 | 5 | 6 | 7 | 8 | 9 |
|---|---|---|---|---|---|---|---|---|---|
| Focal length f (mm) | 4.765 | 4.774 | 4.767 | 4.773 | 4.767 | 4.797 | 4.797 | 4.784 | 4.824 |
| F-value | 1.560 | 1.560 | 1.560 | 1.560 | 1.560 | 1.560 | 1.560 | 1.560 | 1.560 |
| Image height (mm) | 3.645 | 3.645 | 3.645 | 3.645 | 3.645 | 3.645 | 3.645 | 3.645 | 3.645 |

(continued)

| Example | 1 | 2 | 3 | 4 | 5 | 6 | 7 | 8 | 9 |
|---|---|---|---|---|---|---|---|---|---|
| Total length Da (mm) | 23.985 | 23.981 | 24.000 | 24.000 | 24.000 | 24.000 | 24.000 | 24.000 | 24.874 |

Values for Examples 1 to 9 regarding the parameters included in Conditional Expressions (1) to (42) are summarized in Table 2 below.

[Table 2]

| Conditional Expression | Example 1 | Example 2 | Example 3 | Example 4 | Example 5 | Example 6 | Example 7 | Example 8 | Example 9 |
|---|---|---|---|---|---|---|---|---|---|
| (1) | 0.69979757 | 0.687106998 | 0.656983935 | 0.6720398 | 0.668458008 | 0.682434524 | 0.67818359 | 0.677545932 | 0.766270198 |
| (2) | -0.756381973 | -0.755065229 | -0.755128582 | -0.754179411 | -0.755207787 | -1.064340422 | -1.064251581 | -1.067146534 | -1.059190031 |
| (3) | 0.147071273 | 0.146818239 | 0.146830558 | 0.146615997 | 0.146845959 | 0.14608594 | 0.146073746 | 0.146471093 | 0.145379024 |
| (4) | 2.30558462 | 2.195154159 | 2.244878131 | 2.242437047 | 2.245494766 | 3.265669387 | 3.264594228 | 2.981891988 | 3.617803323 |
| (5) | 0.382393109 | 0.381727421 | 0.504522408 | 0.579365238 | 0.549704158 | 0.3854696 | 0.382886378 | 0.392444025 | 0.498412368 |
| (6) | -4.732782715 | -4.541730535 | -4.247983687 | -4.369306335 | -4.350868156 | -4.221516763 | -4.187121115 | -4.236354208 | -6.479416407 |
| (7) | 5.348545015 | 5.339234028 | 5.339682007 | 5.33297021 | 5.340242086 | 4.999499134 | 4.999081822 | 5.012680212 | 4.975306334 |
| (8) | 0.329620548 | 0.32904673 | 0.329074338 | 0.328660703 | 0.329108855 | 0.313141474 | 0.313115336 | 0.317381515 | 0.315015161 |
| (9) | 5.039483274 | 5.029728224 | 5.034190544 | 5.027862739 | 5.03471858 | 5.008660809 | 5.008242733 | 5.021866042 | 5.166037541 |
| (10) | -1.23176174 | -1.231626327 | -1.267649872 | -1.246882935 | -1.255137721 | -1.32163178 | -1.328339112 | -1.303818292 | -1.449967186 |
| (11) | 1.847716357 | 1.794544654 | 1.781336578 | 1636719739 | 1.695889782 | 2.611713379 | 2.548900899 | 2.384074198 | 3.001173624 |
| (12) | 1.754496691 | 1.73915978 | 1.5702601 | 1.503120836 | 1.563834987 | 1.661090219 | 1.572213435 | 1.560237283 | 1.548604361 |
| (13) | 4953273073 | 49.43229698 | 19.92867021 | 49.91525567 | 49.93044434 | 49.95370564 | 49.96028202 | 49.9305478 | 48.4121484 |
| (14) | -1.395119025 | -1.328379756 | -1.24146453 | -1.123669083 | -1.193557658 | -1.778965085 | -1.706236306 | -1.630378523 | -1.93078027 |
| (15) | 1.239244669 | 1.21611477 | 1.303325712 | 1.289060209 | 1.286823512 | 1.445321911 | 1.506168903 | 1.476266661 | 1.75221433 |
| (16) | 0.02101061 | 0.020974034 | 0.020975794 | 0.020949428 | 0.020977994 | 0.02086942 | 0.020867678 | 0.020924442 | 0.072689512 |
| (17) | 0.168084883 | 0.157305256 | 0.157318455 | 0.146645997 | 0.146845959 | 0.17739007 | 0.208676781 | 0.188319977 | 0.20768432 |
| (18) | 0.329620548 | 0.32904673 | 0.329074338 | 0.328660703 | 0.329108855 | 0.316845796 | 0.316819349 | 0.328268712 | 0.325821184 |
| (19) | -0.842761618 | -0.850061209 | -0.877934272 | -0.877934272 | -0.877934272 | -0.918465228 | -0.918465228 | -0.918465228 | -0.980090913 |
| (20) | 0.835860043 | 0.842315102 | 0.879384899 | 0.857012244 | 0.864568055 | 0.796826244 | 0.802942117 | 0.814302381 | 0.857418484 |
| (21) | 5.348515015 | 5.339231028 | 5.339682007 | 5.33297021 | 5.340242086 | 4.963749817 | 4.96333549 | 4.976836643 | 4.93973001 |
| (22) | 1.593139861 | 1.616863472 | 1.662464863 | 1.724781066 | 1.690577461 | 1.472871257 | 1.494599697 | 1.510346489 | 1.547712984 |
| (23) | 1.434227566 | 1.359877745 | 1.363426606 | 1.361712825 | 1.363569615 | 1.773900703 | 1.773752635 | 1.778577556 | 2.088189595 |
| (24) | 0.008088577 | 0.120018152 | 0.082095522 | -0.059131155 | -0.015383706 | -0.121003125 | -0.092781799 | -0.015907574 | 0 |
| (25) | 0.735371363 | 0.734091195 | 0.734152788 | 0.733229983 | 0.734229793 | 0.730429701 | 0.730368732 | 0.732355164 | 0.726895119 |
| (26) | 0.21783591 | 0.159165826 | 0.041951588 | 0.041898856 | 0.041955988 | 0.299539558 | 0.314526443 | 0.267994546 | 0.265996414 |

| Conditional Expression | Example 1 | Example 2 | Example 3 | Example 4 | Example 5 | Example 6 | Example 7 | Example 8 | Example 9 |
|---|---|---|---|---|---|---|---|---|---|
| (27) | 11.77520748 | 11.75470867 | 11.75569493 | 11.74091842 | 11.75692798 | 13.7730868 | 13.77193715 | 13.43313595 | 13.33298027 |
| (28) | 0.334802605 | 0.334219766 | 0.334247808 | 0.33382767 | 0.334282867 | 0.337666799 | 0.337638614 | 0.33855705 | 0.336032814 |
| (29) | 5.413567446 | 5.678981485 | 13.57719217 | 116.2151675 | 17.3181654 | 5.104524885 | 6.672478302 | 6.832518768 | 7.618444149 |
| (30) | 1.593139861 | 1.616863472 | 1.662464863 | 1.724781066 | 1.690577461 | 1.472871257 | 1.494599697 | 1.510346489 | 1.547712984 |
| (31) | 0.379279546 | 0.378619279 | 0.378651047 | 0.378175095 | 0.378690763 | 0.385387858 | 0.38535569 | 0.386403925 | 0.383522949 |
| (32) | 0.148269216 | 0.192942992 | 0.155515659 | 0.148263553 | 0.173175264 | 0.059958522 | -0.079486514 | -0.018919669 | -0.338243146 |
| (33) | 0.552850793 | 0.615237809 | 0.577128991 | 0.5464518 | 0.592819873 | 0.538026762 | 0.453762884 | 0.51186199 | 0.508045615 |
| (34) | 0.052526526 | 0.052435085 | 0.052439185 | 0.05237357 | 0.020977994 | 0.085286657 | 0.098497685 | 0.09918184 | 0.098740116 |
| (35) | 1.605258848 | 1.645560978 | 1.6979328 | 1.670807342 | 1.70721122 | 1.791259678 | 1.646998209 | 1.647334428 | 1.557300104 |
| (36) | 11.77520748 | 11.75470867 | 11.75569493 | 11.74091842 | 11.75692798 | 12.30479788 | 12.30377079 | 11.72691511 | 11.63948079 |
| (37) | 0.6335962 | 0.681695847 | 0.127261659 | 0.077818798 | 0.208808602 | 0.563755367 | 0.496888742 | 0.496551337 | 0.496551337 |
| (38) | 14.07748713 | 14.05298041 | 14.0541595 | 14.0364939 | 14.05563364 | 13.23035666 | 13.22925231 | 13.26523822 | 13.16633437 |
| (39) | 0.671348853 | 0.68710832 | 0.824920896 | 0.799308189 | 0.804453844 | 0.465014463 | 0.464411723 | 0.499903096 | 0.496175885 |
| (40) | -1.285255063 | -1.241321189 | -1.573184545 | -1.571207106 | -1.468459586 | -1.279478269 | -1.258334381 | -1.244943113 | -1.235660983 |
| (41) | 0.340121021 | 0.339528923 | 0.339557411 | 0.339130599 | 0.339593027 | 0.337835424 | 0.337807224 | 0.33872612 | 0.336200623 |
| (42) | 1.922902073 | 1.917559781 | 1.816631128 | 1.814317685 | 1.82906106 | 1.983158568 | 1.979493901 | 1.973789593 | 1.959073281 |

In basic lens data provided for each of the examples, number i (i is a natural number) in lens specifications denotes surface number given in order from the object side to each of the surfaces of all lenses, the aperture stop 170, and the first flat plate 180a and the second flat plate 180b that are included in the imaging lens 10; Ri denotes curvature radius of an i-th surface; Di denotes interval between an i-th surface and an (i + 1)-th surface on the optical axis Ax; Nd denotes refractive index for the d-line; and vd denotes Abbe number for the d-line.

The unit of lengths such as curvature radius Ri and surface interval Di given as values in all of the following specifications is millimeters (mm) unless otherwise stated, and the description of the unit is omitted in each of the tables. This, however, is not limiting because the imaging lens 10 exhibits the same and/or equivalent optical performance between proportional enlargement and proportional contraction.

When a direction from the object side toward the image side is defined as positive; k is defined as a constant of a cone; A is defined as a fourth-order aspherical coefficient; B is defined as a sixth-order aspherical coefficient; C is defined as an eighth-order aspherical coefficient; and D is defined as a tenth-order aspherical coefficient, an aspherical surface of each lens to be described in the following examples has a shape expressed as Mathematical Expression (16) below, which is an aspherical equation and where h denotes height of a ray, c denotes reciprocal of center curvature radius, and Z denotes depth from a tangential plane to a face vertex.

[Math. 1]

$$Z = \frac{ch^2}{1 + \sqrt{1 - (1+k)c^2 h^2}} + Ah^4 + Bh^6 + Ch^8 + Dh^{10} \tag{16}$$

Aspherical surface data provided for each of the following examples includes aspherical coefficients and the like that determine the aspherical shapes of respective lens surfaces that are each provided with * in the basic lens data.

(EXAMPLE 1)

FIG. 1 is a diagram illustrating a lens configuration of an imaging lens 10 according to Example 1 of the present disclosure. FIG. 1 is an optical sectional view of the lens configuration of the imaging lens 10 according to Example 1.

As illustrated in FIG. 1, in the imaging lens 10 according to Example 1, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.

In FIG. 1, D1 corresponds to the on-axis thickness of the first lens 110 and is a distance between a surface S1 and a surface S2 on the optical axis Ax. D2 is an on-axis distance between the surface S2 and a surface S3. D3 corresponds to the on-axis thickness of the second lens 120 and is a distance between the surface S3 and a surface S4 on the optical axis Ax. D4 is an on-axis distance between the surface S4 and a surface S5. D5 corresponds to the on-axis thickness of the third lens 130 and is a distance between the surface S5 and a surface S6 on the optical axis Ax. D6 is an on-axis distance between the surface S6 and a surface S7. D7 is an on-axis distance between the surface S7 and a surface S8.

D8 corresponds to the on-axis thickness of the fourth lens 140 and is a distance between the surface S8 and a surface S9 on the optical axis Ax. D9 corresponds to the on-axis thickness of the fifth lens 150 and is a distance between the surface S9 and a surface S10 on the optical axis Ax. D10 is an on-axis distance between the surface S10 and a surface S11. D11 corresponds to the on-axis thickness of the sixth lens 160 and is a distance between the surface S11 and a surface S12 on the optical axis Ax. D12 is an on-axis distance between the surface S12 and a surface S13. D13 corresponds to the on-axis thickness of the first flat plate 180a and is a distance between the surface S13 and a surface S14 on the optical axis Ax. D14 is an on-axis distance between the surface S14 and a surface S15. D15 corresponds to the on-axis thickness of the second flat plate 180b and is a distance between the surface S15 and a surface S16 on the optical axis Ax. D16 is an on-axis distance between the surface S16 and the image plane 21.

The above description regarding surface interval Di also applies to the other examples to be provided below. Surface interval Di is illustrated only in FIG. 1 and is not illustrated in the other drawings.

Table 3 summarizes basic lens data for the imaging lens 10 according to Example 1, including values specified therefor. In Table 3, values of curvature radius Ri for the surfaces S11 and S12 provided with * as aspherical surfaces are of paraxial curvature radius.

[Table 3]

| Basic lens data for Example 1 | | | | | | | |
|---|---|---|---|---|---|---|---|
| Number i | Surface Si | Ri | Di | Nd | | vd | |
| 1 | S1 | -22.5257 | 0.7000 | N1 | 1.568829 | v1 | 56.0441 |
| 2 | S2 | 3.9783 | 1.8200 | - | | | |
| 3 | S3 | -6.8262 | 0.8000 | N2 | 1.568829 | v2 | 56.0441 |
| 4 | S4 | 80.0000 | 0.1000 | - | | | |
| 5 | S5 | 13.5696 | 3.5000 | N3 | 1.805181 | v3 | 25.1561 |
| 6 | S6 | -13.3518 | 1.0368 | - | | | |
| 7 | S7 | - | 0.0000 | | | | |
| 8 | S8 | 7.6402 | 2.6313 | N4 | 1.593193 | v4 | 67.0018 |
| 9 | S9 | -5.6672 | 0.8000 | N5 | 1.805181 | v5 | 25.4564 |
| 10 | S10 | 119.8788 | 0.2500 | - | | | |
| 11* | S11 | 27.2732 | 3.1953 | N6 | 1.618806 | v6 | 63.8554 |
| 12* | S12 | -6.1172 | 2.0000 | - | | | |
| 13 | S13 | 1E+18 | 1.0000 | N7 | 1.51633 | v7 | 64.142 |
| 14 | S14 | 1E+18 | 5.5925 | - | | | |
| 15 | S15 | 1E+18 | 0.4000 | N8 | 1.51633 | v8 | 64.142 |
| 16 | S16 | 1E+18 | 0.1595 | - | | | |
| - | Image plane 21 | ∞ | 0.0000 | | | | |
| Surfaces with * are aspherical. | | | | | | | |

Table 4 summarizes aspherical surface data for the imaging lens 10 according to Example 1, including aspherical coefficients thereof. The aspherical surface data summarized in Table 4 is data on the surfaces S11 and S12 of the sixth lens 160.

[Table 4]

| Aspherical surface data for Example 1 | | |
|---|---|---|
| Surface | S11 | S12 |
| k | 3.71774451 | -5.336782608 |
| A | -0.001296686 | -0.002245677 |
| B | 6.81E-05 | 8.95E-05 |
| C | -1.35E-05 | -2.79E-06 |
| D | 8.65E-07 | 5.11E-08 |

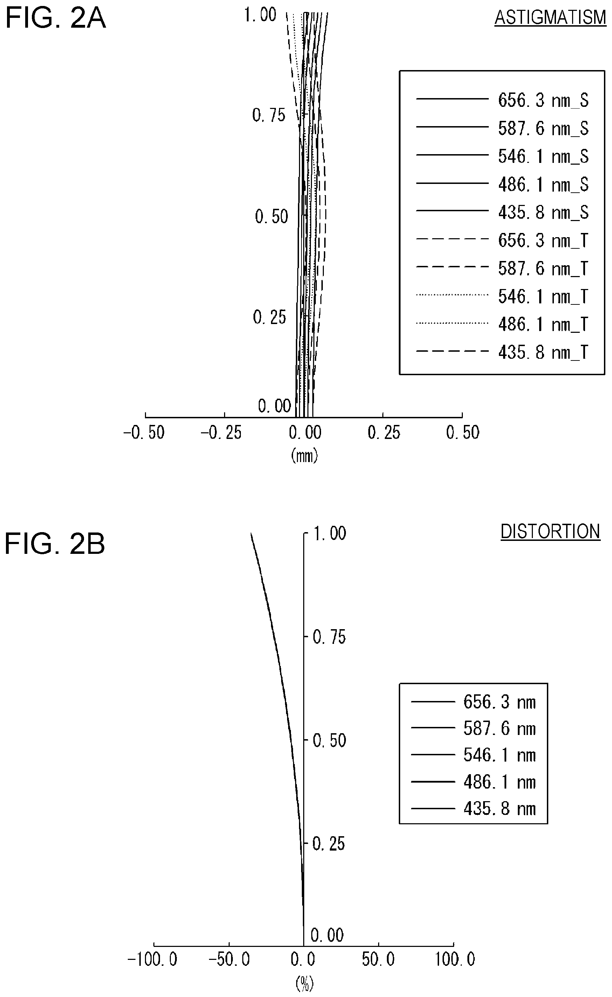

FIGs. 2A and 2B are aberration diagrams for the imaging lens 10 illustrated in FIG. 1.

FIG. 2A is a graph illustrating astigmatism of the imaging lens 10 illustrated in FIG. 1. FIG. 2A is illustrated with a vertical axis representing height of incidence on an entrance pupil that is normalized with a pupil diameter being set to 1, and a horizontal axis representing displacement in focus position. Lines in the graph represent astigmatism (mm) for light having wavelengths listed on the right of the graph. "S" means a value in a sagittal image plane. "T" means a value in a tangential image plane.

FIG. 2B is a graph illustrating distortion of the imaging lens 10 illustrated in FIG. 1. FIG. 2B is illustrated with a vertical axis representing height of incidence on the entrance pupil that is normalized with the pupil diameter being set to 1, and a horizontal axis representing displacement in focus position. Lines in the graph represent distortion (%) for light having wavelengths listed on the right of the graph.

As illustrated in FIGs. 2A and 2B, Example 1 provides an imaging lens 10 in which aberrations of astigmatism and distortion are favorably corrected and that is excellent in focusing performance.

The description regarding the above aberration diagrams also applies to aberration diagrams provided for the other examples, and is therefore omitted in the following description.

(EXAMPLE 2)

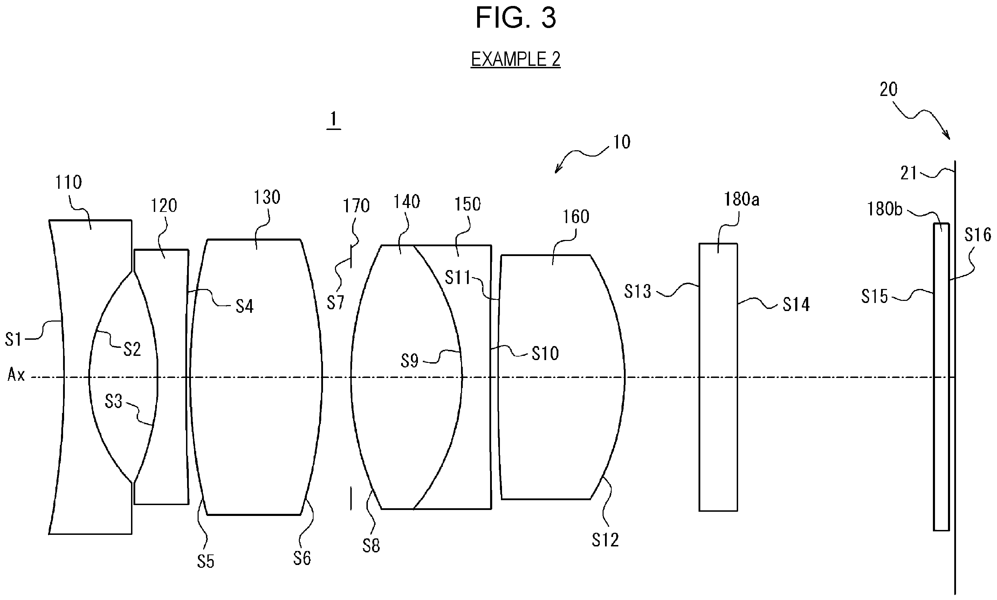

FIG. 3 is a diagram illustrating a lens configuration of an imaging lens 10 according to Example 2 of the present disclosure. FIG. 3 is an optical sectional view of the lens configuration of the imaging lens 10 according to Example 2.

As illustrated in FIG. 3, in the imaging lens 10 according to Example 2, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.

Table 5 summarizes basic lens data for the imaging lens 10 according to Example 2, including values specified therefor. In Table 5, values of curvature radius Ri for the surfaces S11 and S12 provided with * as aspherical surfaces are of paraxial curvature radius.

[Table 5]

| Basic lens data for Example 2 | | | | | | | |
|---|---|---|---|---|---|---|---|
| Number i | Surface Si | Ri | Di | Nd | | vd | |
| 1 | S1 | -21.6541 | 0.7000 | N1 | 1.568829 | v1 | 56.0441 |
| 2 | S2 | 4.0160 | 1.8200 | - | | | |
| 3 | S3 | 6.4836 | 0.7500 | N2 | 1.568829 | v2 | 56.0441 |
| 4 | S4 | 80.0000 | 0.1000 | - | | | |
| 5 | S5 | 14.8684 | 3.5000 | N3 | 1.805181 | v3 | 25.4564 |
| 6 | S6 | -11.6819 | 0.7589 | - | | | |
| 7 | S7 | - | 0.0000 | | | | |
| 8 | S8 | 7.8457 | 2.9333 | N4 | 1.593493 | v4 | 67.0018 |
| 9 | S9 | -5.3078 | 0.7500 | N5 | 1.805181 | v5 | 25.4564 |
| 10 | S10 | 180.3487 | 0.2500 | - | | | |
| 11* | S11 | 31.2685 | 3.2760 | N6 | 1.618806 | v6 | 63.8554 |
| 12* | S12 | -5.9184 | 2.0000 | - | | | |
| 13 | S13 | 1E+18 | 1.0000 | N7 | 1.51633 | v7 | 64.142 |
| 14 | S14 | 1E+18 | 5.5830 | - | | | |
| 15 | S15 | 1E+18 | 0.4000 | N8 | 1.51633 | v8 | 64.142 |
| 16 | S16 | 1E+18 | 0.1595 | - | | | |
| - | Image plane 21 | ∞ | 0.0000 | | | | |
| Surfaces with * are aspherical. | | | | | | | |

Table 6 summarizes aspherical surface data for the imaging lens 10 according to Example 2, including aspherical coefficients thereof. The aspherical surface data summarized in Table 6 is data on the surfaces S11 and S12 of the sixth lens 160.

[Table 6]

| Aspherical surface data for Example 2 | | |
|---|---|---|
| Surface | S11 | S12 |
| k | -1.359320287 | -4.883347978 |

(continued)

| Aspherical surface data for Example 2 | | |
|---|---|---|
| Surface | S11 | S12 |
| A | -0.001332651 | -0.00228472 |
| B | 9.88E-05 | 8.69E-05 |
| C | -1.84E-05 | -2.85E-06 |
| D | 1.12E-06 | 4.75E-08 |

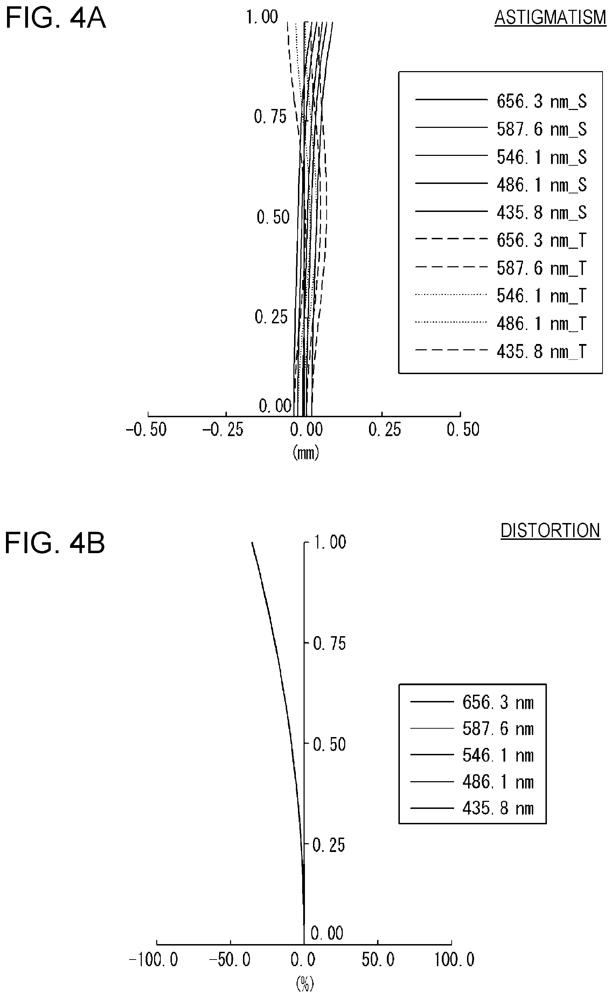

FIGs. 4A and 4B are aberration diagrams for the imaging lens 10 illustrated in FIG. 3. FIG. 4A is a graph illustrating astigmatism of the imaging lens 10 illustrated in FIG. 3. FIG. 4B is a graph illustrating distortion of the imaging lens 10 illustrated in FIG. 3. As illustrated in FIGs. 4A and 4B, Example 2 provides an imaging lens 10 in which aberrations of astigmatism and distortion are favorably corrected and that is excellent in focusing performance.

(EXAMPLE 3)

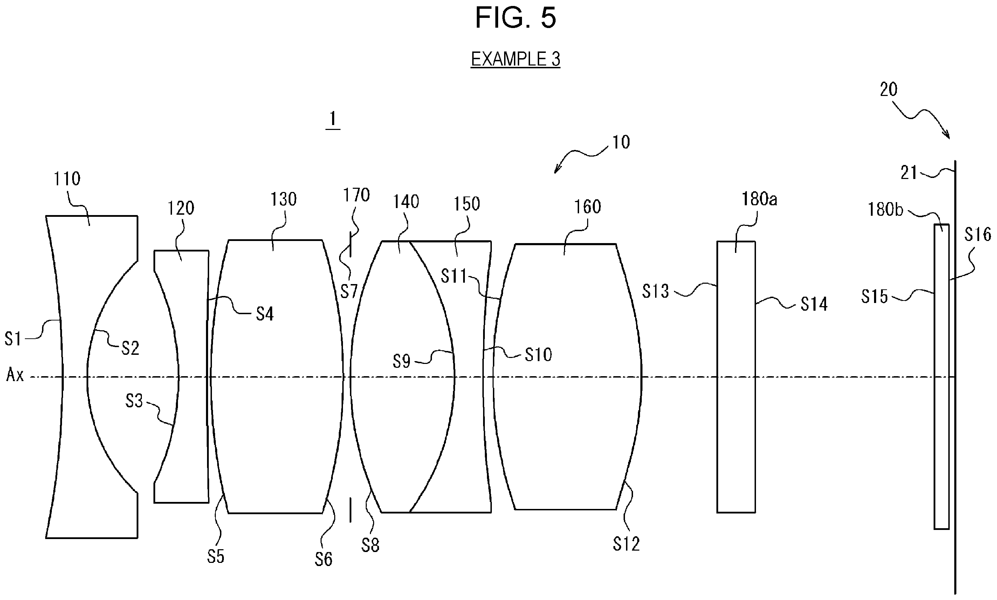

FIG. 5 is a diagram illustrating a lens configuration of an imaging lens 10 according to Example 3 of the present disclosure. FIG. 5 is an optical sectional view of the lens configuration of the imaging lens 10 according to Example 3.
As illustrated in FIG. 5, in the imaging lens 10 according to Example 3, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.
Table 7 summarizes basic lens data for the imaging lens 10 according to Example 3, including values specified therefor. In Table 7, values of curvature radius Ri for the surfaces S11 and S12 provided with * as aspherical surfaces are of paraxial curvature radius.

[Table 7]

| Basic lens data for Example 3 | | | | | | | |
|---|---|---|---|---|---|---|---|
| Number i | Surface Si | Ri | Di | Nd | | vd | |
| 1 | 1 | -20.2518 | 0.7000 | N1 | 1.568829 | v1 | 56.0441 |
| 2 | S2 | 4.1924 | 2.4053 | - | | | |
| 3 | S3 | 6.5000 | 0.7500 | N2 | 1.568829 | v2 | 56.0441 |
| 4 | S4 | 100.0000 | 0.1000 | - | | | |
| 5 | S5 | 14.0000 | 3.5000 | N3 | 1.805181 | v3 | 25.4564 |
| 6 | S6 | -11.8757 | 0.2000 | - | | | |
| 7 | S7 | - | 0.0000 | | | | |
| 8 | S8 | 8.0947 | 2.7514 | N4 | 1.593493 | v4 | 67.0018 |
| 9 | S9 | -5.9159 | 0.7500 | N5 | 1.805181 | v5 | 25.4564 |
| 10 | S10 | 25.8933 | 0.2500 | - | | | |
| 11* | S11 | 9.6873 | 3.9327 | N6 | 1.618806 | v6 | 63.8554 |
| 12* | S12 | -7.5000 | 2.0000 | - | | | |
| 13 | S13 | 1E+18 | 1.0000 | N7 | 1.51633 | v7 | 64.142 |
| 14 | S14 | 1E+18 | 5.1011 | - | | | |
| 15 | S15 | 1E+18 | 0.4000 | N8 | 1.51633 | v8 | 64.142 |

(continued)

| Basic lens data for Example 3 | | | | | |
|---|---|---|---|---|---|
| Number i | Surface Si | Ri | Di | Nd | vd |
| 16 | S16 | 1E+18 | 0.1595 | - | |
| - | Image plane 21 | ∞ | 0.0000 | | |
| Surfaces with * are aspherical. | | | | | |

Table 8 summarizes aspherical surface data for the imaging lens 10 according to Example 3, including aspherical coefficients thereof. The aspherical surface data summarized in Table 8 is data on the surfaces S11 and S12 of the sixth lens 160.

[Table 8]

| Aspherical surface data for Example 3 | | |
|---|---|---|
| Surface | S11 | S12 |
| k | 1.697920256 | -7.487844597 |
| A | -0.001046872 | -0.001237804 |
| B | 4.78E-05 | 9.86E-05 |
| C | -2.02E-06 | -2.48E-06 |
| D | 9.22E-08 | 7.50E-08 |

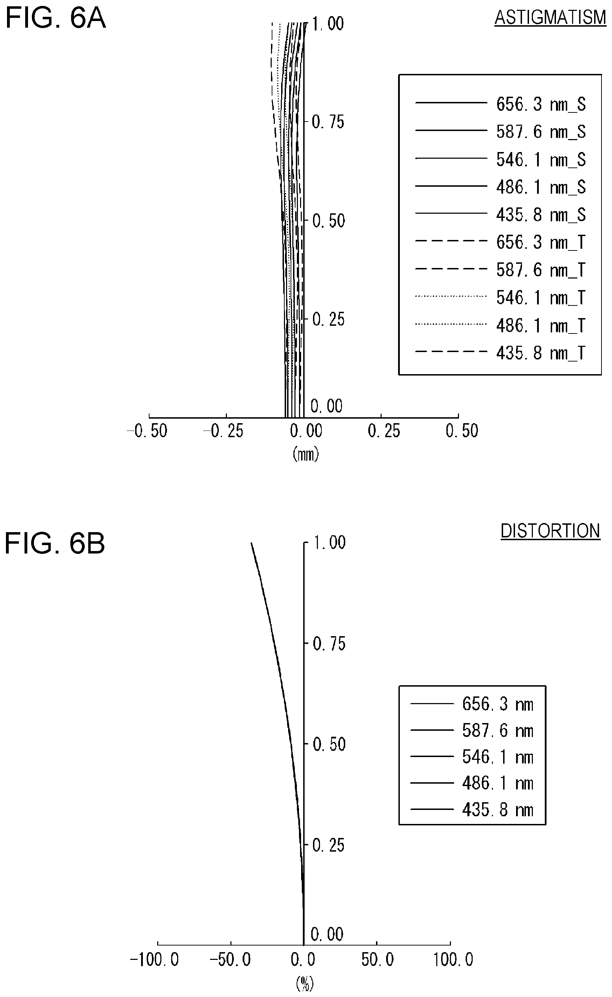

FIGs. 6A and 6B are aberration diagrams for the imaging lens 10 illustrated in FIG. 5. FIG. 6A is a graph illustrating astigmatism of the imaging lens 10 illustrated in FIG. 5. FIG. 6B is a graph illustrating distortion of the imaging lens 10 illustrated in FIG. 5. As illustrated in FIGs. 6A and 6B, Example 3 provides an imaging lens 10 in which aberrations of astigmatism and distortion are favorably corrected and that is excellent in focusing performance.

(EXAMPLE 4)

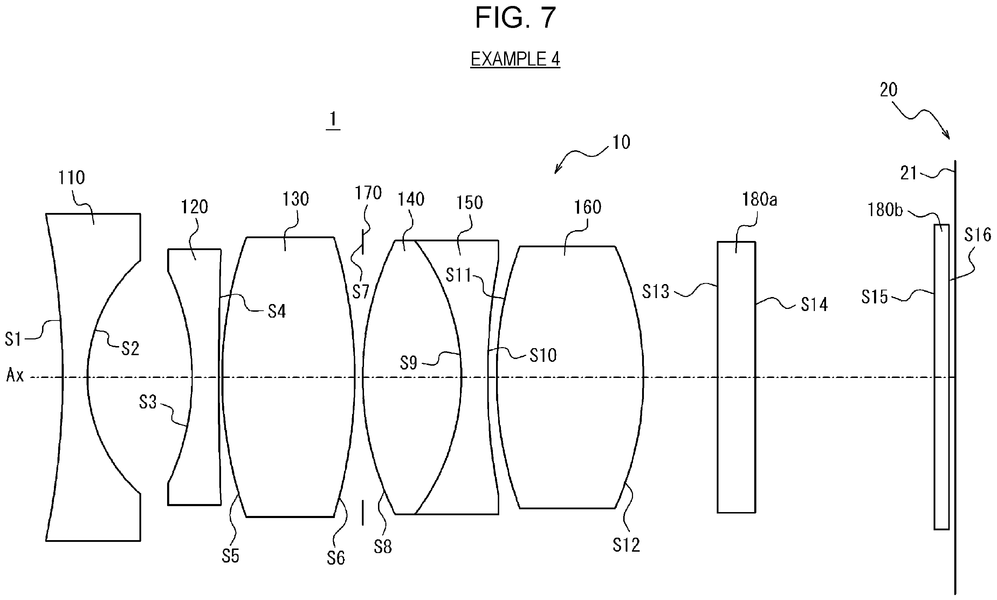

FIG. 7 is a diagram illustrating a lens configuration of an imaging lens 10 according to Example 4 of the present disclosure. FIG. 7 is an optical sectional view of the lens configuration of the imaging lens 10 according to Example 4.
As illustrated in FIG. 7, in the imaging lens 10 according to Example 4, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.
Table 9 summarizes basic lens data for the imaging lens 10 according to Example 4, including values specified therefor. In Table 9, values of curvature radius Ri for the surfaces S11 and S12 provided with * as aspherical surfaces are of paraxial curvature radius.

[Table 9]

| Basic lens data for Example 4 | | | | | | | |
|---|---|---|---|---|---|---|---|
| Number i | Surface Si | Ri | Di | Nd | | vd | |
| 1 | S1 | -20.8564 | 0.7000 | N1 | 1.568829 | v1 | 56.0441 |
| 2 | S2 | 4.0909 | 2.7655 | - | | | |
| 3 | S3 | -6.5000 | 0.7000 | N2 | 1.568829 | v2 | 56.0441 |
| 4 | S4 | 100.0000 | 0.1000 | - | | | |
| 5 | S5 | 11.0924 | 3.5000 | N3 | 1.805181 | v3 | 25.4561 |

(continued)

| Basic lens data for Example 4 | | | | | | | |
|---|---|---|---|---|---|---|---|
| Number i | Surface Si | Ri | Di | Nd | | vd | |
| 6 | S6 | -12.4867 | 0.2000 | - | | | |
| 7 | S7 | - | 0.0000 | | | | |
| 8 | S8 | 7.9754 | 2.6084 | N4 | 1.593493 | v4 | 67.0018 |
| 9 | S9 | -5.9159 | 0.7000 | N5 | 1.805181 | v5 | 25.4564 |
| 10 | S10 | 16.8416 | 0.2500 | - | | | |
| 11* | S11 | 8.7658 | 3.8154 | N6 | 1.618806 | v6 | 63.8554 |
| 12* | S12 | -7.5000 | 2.0000 | - | | | |
| 13 | S13 | 1E+18 | 1.0000 | N7 | 1.51633 | v7 | 64.142 |
| 14 | S14 | 1E+18 | 5.1011 | - | | | |
| 15 | S15 | 1E+18 | 0.4000 | N8 | 1.51633 | v8 | 64.142 |
| 16 | S16 | 1E+18 | 0.1595 | - | | | |
| - | Image plane 21 | ∞ | 0.0000 | | | | |
| Surfaces with * are aspherical. | | | | | | | |

Table 10 summarizes aspherical surface data for the imaging lens 10 according to Example 4, including aspherical coefficients thereof. The aspherical surface data summarized in Table 10 is data on the surfaces S11 and S12 of the sixth lens 160.

[Table 10]

| Aspherical surface data for Example 4 | | |
|---|---|---|
| Surface | S11 | S12 |
| k | 0.900134622 | -9.030507299 |
| A | -0.001268717 | -0.001787562 |
| B | 3.49E-05 | 1.40E-04 |
| C | -1.80E-06 | -6.35E-06 |
| D | 7.13E-08 | 1.72E-07 |

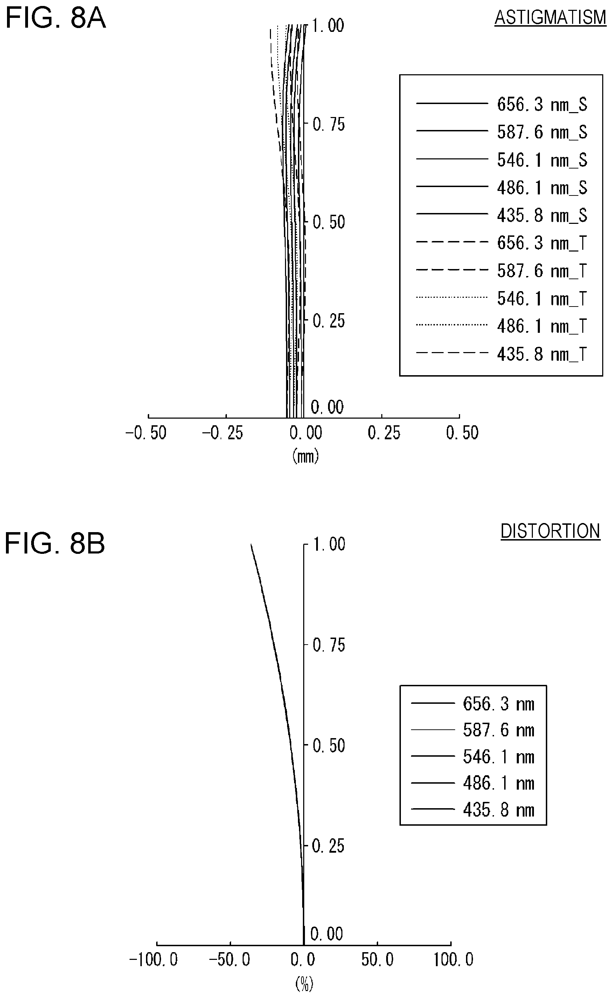

FIGs. 8A and 8B are aberration diagrams for the imaging lens 10 illustrated in FIG. 7. FIG. 8A is a graph illustrating astigmatism of the imaging lens 10 illustrated in FIG. 7. FIG. 8B is a graph illustrating distortion of the imaging lens 10 illustrated in FIG. 7. As illustrated in FIGs. 8A and 8B, Example 4 provides an imaging lens 10 in which aberrations of astigmatism and distortion are favorably corrected and that is excellent in focusing performance.

(EXAMPLE 5)

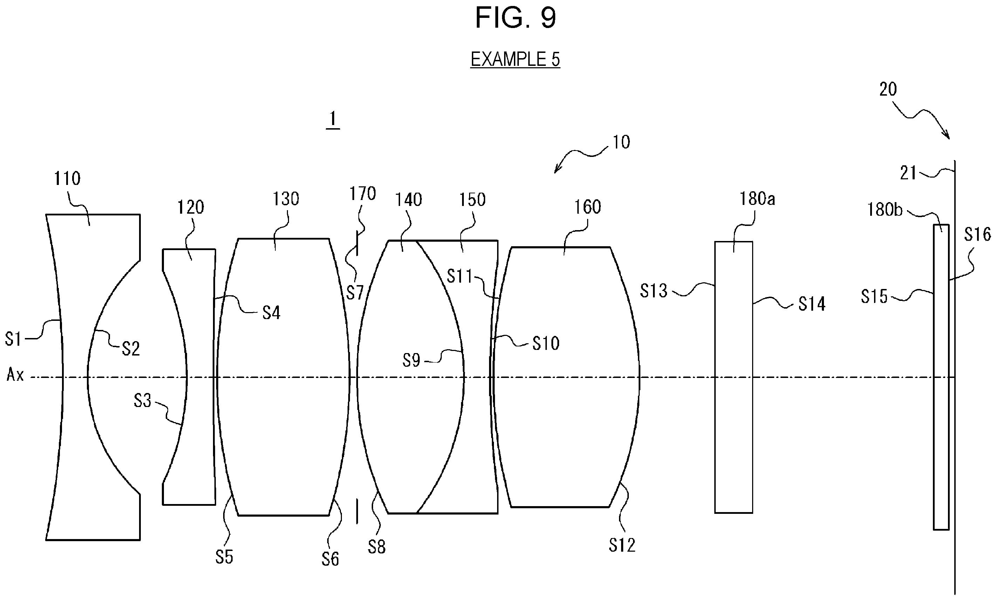

FIG. 9 is a diagram illustrating a lens configuration of an imaging lens 10 according to Example 5 of the present disclosure. FIG. 9 is an optical sectional view of the lens configuration of the imaging lens 10 according to Example 5.
As illustrated in FIG. 9, in the imaging lens 10 according to Example 5, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.
Table 11 summarizes basic lens data for the imaging lens 10 according to Example 5, including values specified therefor. In Table 11, values of curvature radius Ri for the surfaces S11 and S12 provided with * as aspherical surfaces are of paraxial curvature radius.

[Table 11]

| Basic lens data for Example 5 | | | | | | | |
|---|---|---|---|---|---|---|---|
| Number i | Surface Si | Ri | Di | Nd | | vd | |
| 1 | S1 | -20.7402 | 0.7000 | N1 | 1.568829 | ν1 | 56.0441 |
| 2 | S2 | 4.1213 | 2.6204 | - | | | |
| 3 | S3 | -6.5000 | 0.7000 | N2 | 1.568829 | v2 | 56.0441 |
| 4 | S4 | 100.0000 | 0.1000 | - | | | |
| 5 | S5 | 12.0000 | 3.5000 | N3 | 1.805181 | v3 | 25.4564 |
| 6 | S6 | -12.3750 | 0.2000 | - | | | |
| 7 | S7 | - | 0.0000 | | | | |
| 8 | S8 | 8.1381 | 2.8259 | N4 | 1.593493 | v4 | 67.0018 |
| 9 | S9 | -5.7355 | 0.7000 | N5 | 1.805181 | v5 | 25.4564 |
| 10 | S10 | 24.0000 | 0.1000 | - | | | |
| 11* | S11 | 10.6948 | 3.8348 | N6 | 1.618806 | v6 | 63.8554 |
| 12* | S12 | -7.0000 | 2.0000 | - | | | |
| 13 | S13 | 1E+18 | 1.0000 | N7 | 1.51633 | v7 | 64.142 |
| 14 | S14 | 1E+18 | 5.1594 | - | | | |
| 15 | S15 | 1E+18 | 0.1000 | N8 | 1.51633 | v8 | 64.142 |
| 16 | S16 | 1E+18 | 0.1595 | - | | | |
| - | Image plane 21 | ∞ | 0.0000 | | | | |
| Surfaces with * are aspherical. | | | | | | | |

Table 12 summarizes aspherical surface data for the imaging lens 10 according to Example 5, including aspherical coefficients thereof. The aspherical surface data summarized in Table 12 is data on the surfaces S11 and S12 of the sixth lens 160.

[Table 12]

| Aspherical surface data for Example 5 | | |
|---|---|---|
| Surface | S11 | S12 |
| k | 1.151359887 | -7.837598418 |
| A | -0.001221863 | -0.002023141 |
| B | 3.76E-05 | 1.40E-04 |
| C | -1.87E-06 | -6.08E-06 |
| D | 8.89E-08 | 1.60E-07 |

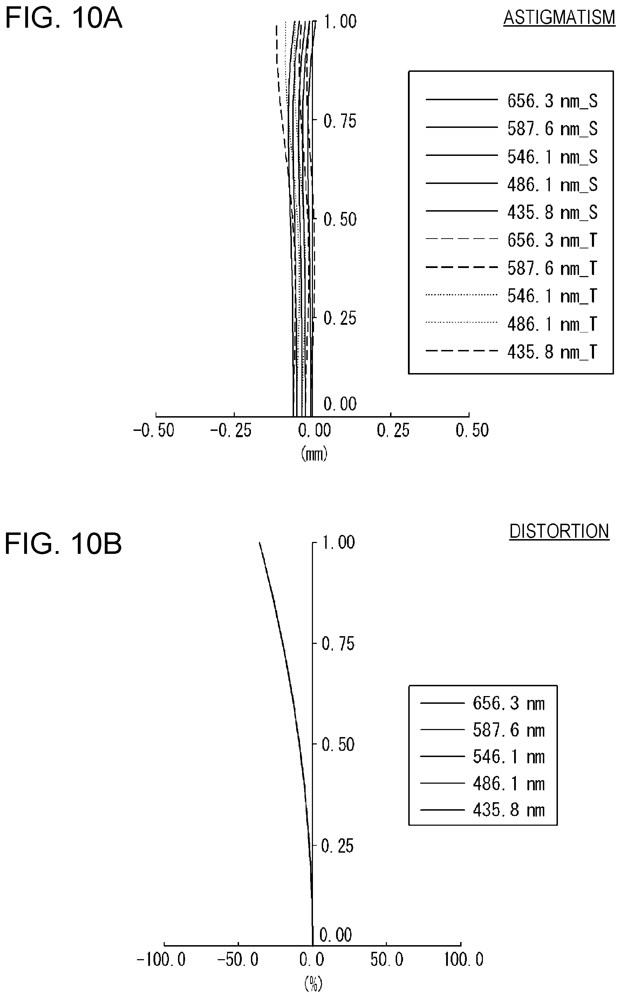

FIGs. 10A and 10B are aberration diagrams for the imaging lens 10 illustrated in FIG. 9. FIG. 10A is a graph illustrating astigmatism of the imaging lens 10 illustrated in FIG. 9. FIG. 10B is a graph illustrating distortion of the imaging lens 10 illustrated in FIG. 9. As illustrated in FIGs. 10A and 10B, Example 5 provides an imaging lens 10 in which aberrations of astigmatism and distortion are favorably corrected and that is excellent in focusing performance.

(EXAMPLE 6)

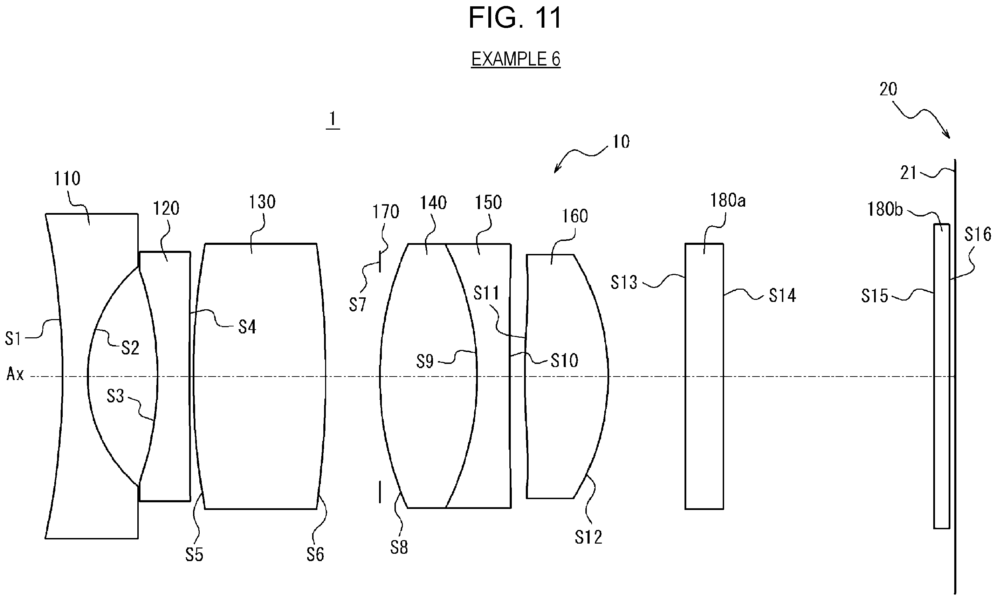

FIG. 11 is a diagram illustrating a lens configuration of an imaging lens 10 according to Example 6 of the present disclosure. FIG. 11 is an optical sectional view of the lens configuration of the imaging lens 10 according to Example 6.
As illustrated in FIG. 11, in the imaging lens 10 according to Example 6, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.

Table 13 summarizes basic lens data for the imaging lens 10 according to Example 6, including values specified therefor. In Table 13, values of curvature radius Ri for the surfaces S11 and S12 provided with * as aspherical surfaces are of paraxial curvature radius.

[Table 13]

| Basic lens data for Example 6 | | | | | | | | |
|---|---|---|---|---|---|---|---|---|
| Number i | Surface Si | Ri | i | Nd | | | vd | |
| 1 | S1 | -20.2282 | 0.7000 | N1 | 1.50048 | ν1 | 65.9965 | |
| 2 | S2 | 3.8182 | 1.8471 | - | | | | |
| 3 | S3 | -8.5000 | 0.8500 | N2 | 1.51823 | v2 | 58.9609 | |
| 4 | S4 | 200.0000 | 0.1000 | - | | | | |
| 5 | S5 | 20.0000 | 3.5000 | N3 | 1.921189 | v3 | 23.9561 | |
| 6 | S6 | -25.5064 | 1.4353 | - | | | | |
| 7 | S7 | - | 0.0000 | | | | | |
| 8 | S8 | 8.5832 | 2.5781 | N4 | 1.617998 | v4 | 63.3959 | |
| 9 | S9 | -7.6121 | 0.8500 | N5 | 1.846663 | v5 | 23.7848 | |
| 10 | S10 | 180.3487 | 0.4087 | - | | | | |
| 11* | S11 | 21.9766 | 2.2282 | N6 | 1.618806 | v6 | 63.8554 | |
| 12* | S12 | -6.1309 | 2.0000 | - | | | | |
| 13 | S13 | 1E+18 | 1.0000 | N7 | 1.51633 | v7 | 64.142 | |
| 14 | S14 | 1E+18 | 5.9432 | - | | | | |
| 15 | S15 | 1E+18 | 0.4000 | N8 | 1.51633 | v8 | 64.142 | |
| 16 | S16 | 1E+18 | 0.1595 | - | | | | |
| - | Image plane 21 | ∞ | 0.0000 | | | | | |
| Surfaces with * are aspherical. | | | | | | | | |

Table 14 summarizes aspherical surface data for the imaging lens 10 according to Example 6, including aspherical coefficients thereof. The aspherical surface data summarized in Table 14 is data on the surfaces S11 and S12 of the sixth lens 160.

[Table 14]

| Aspherical surface data for Example 6 | | |
|---|---|---|
| Surface | S11 | S12 |
| k | -100 | -5.175105034 |
| A | -0.000109721 | -0.00241315 |
| B | -2.02E-04 | 2.19E-05 |
| C | 1.53E-05 | 1.14E-06 |
| D | -9.97E-07 | -3.37E-07 |

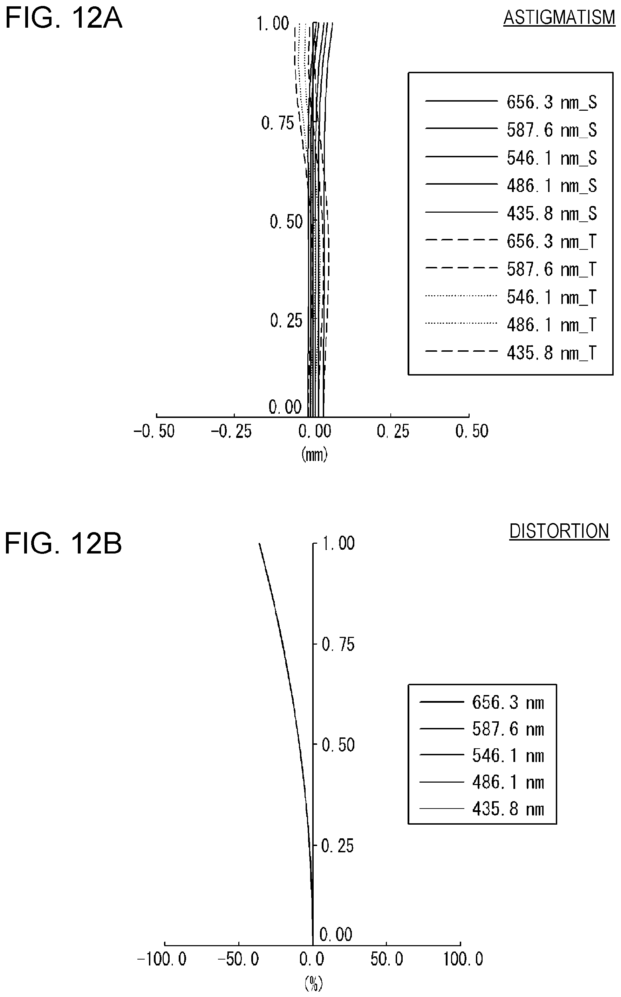

FIGs. 12A and 12B are aberration diagrams for the imaging lens 10 illustrated in FIG. 11. FIG. 12A is a graph illustrating astigmatism of the imaging lens 10 illustrated in FIG. 11. FIG. 12B is a graph illustrating distortion of the imaging lens 10 illustrated in FIG. 11. As illustrated in FIGs. 12A and 12B, Example 6 provides an imaging lens 10 in which aberrations of astigmatism and distortion are favorably corrected and that is excellent in focusing performance.

(EXAMPLE 7)

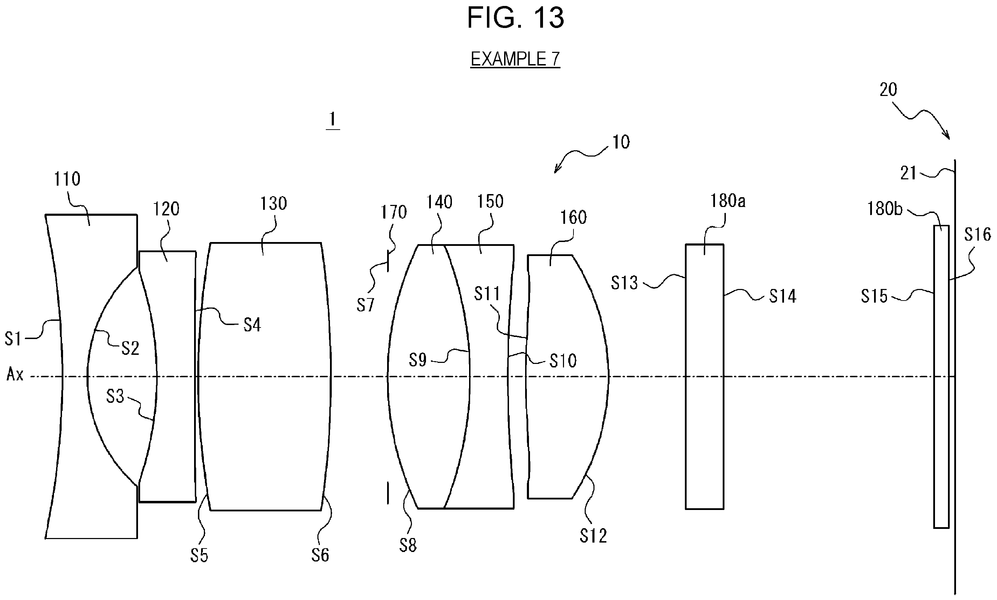

FIG. 13 is a diagram illustrating a lens configuration of an imaging lens 10 according to Example 7 of the present disclosure. FIG. 13 is an optical sectional view of the lens configuration of the imaging lens 10 according to Example 7.
As illustrated in FIG. 13, in the imaging lens 10 according to Example 7, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.
Table 15 summarizes basic lens data for the imaging lens 10 according to Example 7, including values specified therefor. In Table 15, values of curvature radius Ri for the surfaces S11 and S12 provided with * as aspherical surfaces are of paraxial curvature radius.

[Table 15]

| Basic lens data for Example 7 | | | | | | | |
|---|---|---|---|---|---|---|---|
| Number i | Surface Si | Ri | Di | Nd | | vd | |
| 1 | S1 | -20.0651 | 0.7000 | N1 | 1.50048 | ν1 | 65.9965 |
| 2 | S2 | 3.8478 | 1.8348 | - | | | |
| 3 | S3 | -8.5000 | 1.0000 | N2 | 1.51823 | v2 | 58.9609 |
| 4 | S4 | 200.0000 | 0.1000 | - | | | |
| 5 | S5 | 20.0000 | 3.5000 | N3 | 1.921189 | v3 | 23.9561 |
| 6 | S6 | -24.0908 | 1.5072 | - | | | |
| 7 | S7 | - | 0.0000 | | | | |
| 8 | S8 | 7.8926 | 2.1745 | N4 | 1.617998 | v4 | 63.3959 |
| 9 | S9 | -9.2556 | 1.0000 | N5 | 1.816663 | v5 | 23.7848 |
| 10 | S10 | 30.0000 | 0.4720 | - | | | |
| 11* | S11 | 17.9410 | 2.2255 | N6 | 1.618806 | v6 | 63.8554 |
| 12* | S12 | -6.0301 | 2.0000 | - | | | |
| 13 | S13 | 1E+18 | 1.0000 | N7 | 1.51633 | v7 | 64.142 |
| 14 | S14 | IE+18 | 5.9264 | - | | | |
| 15 | S15 | 1E+18 | 0.4000 | N8 | 1.51633 | ν8 | 64.142 |
| 16 | S16 | 1E+18 | 0.1595 | | | | |
| - | Image plane 21 | ∞ | 0.0000 | - | | | |
| Surfaces with * are aspherical. | | | | | | | |

Table 16 summarizes aspherical surface data for the imaging lens 10 according to Example 7, including aspherical coefficients thereof. The aspherical surface data summarized in Table 16 is data on the surfaces S11 and S12 of the sixth lens 160.

[Table 16]

| Aspherical surface data for Example 7 | | |
|---|---|---|
| Surface | S11 | S12 |
| k | -100 | -4.544014461 |
| A | 0.000389467 | -0.002406387 |

(continued)

| Aspherical surface data for Example 7 | | |
|---|---|---|
| Surface | S11 | S12 |
| B | -2.99E-04 | 1.03E-05 |
| C | 1.81E-05 | -4.19E-07 |
| D | -1.14E-06 | -3.80E07 |

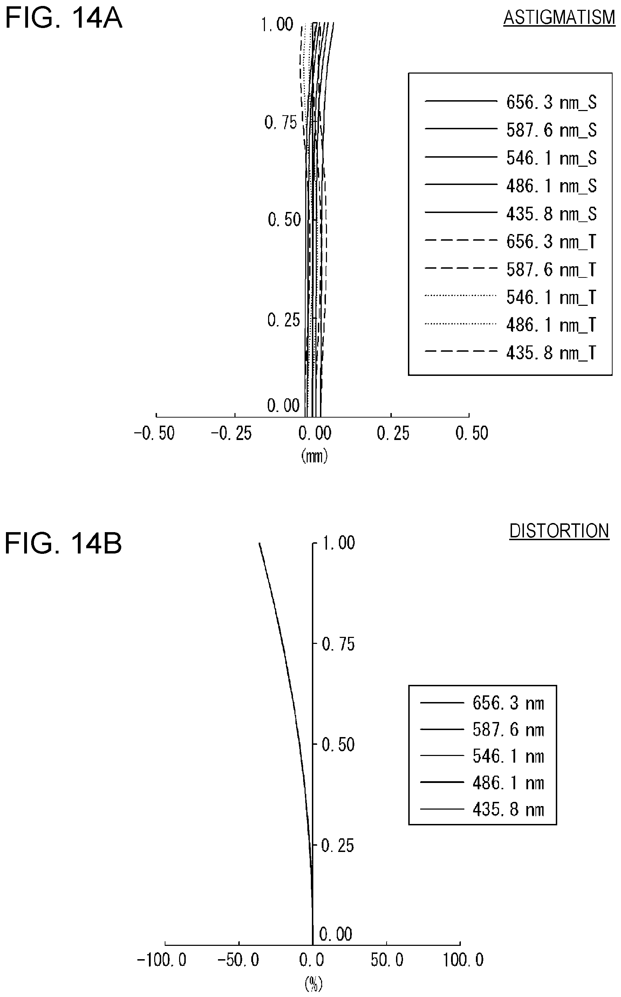

FIGs. 14A and 14B are aberration diagrams for the imaging lens 10 illustrated in FIG. 13. FIG. 14A is a graph illustrating astigmatism of the imaging lens 10 illustrated in FIG. 13. FIG. 14B is a graph illustrating distortion of the imaging lens 10 illustrated in FIG. 13. As illustrated in FIGs. 14A and 14B, Example 7 provides an imaging lens 10 in which aberrations of astigmatism and distortion are favorably corrected and that is excellent in focusing performance.

(EXAMPLE 8)

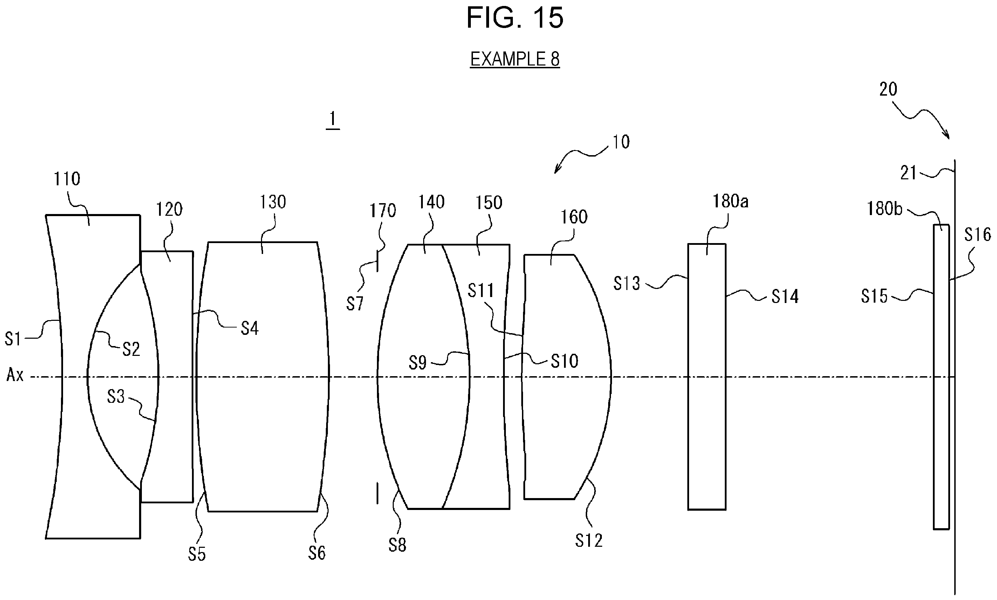

FIG. 15 is a diagram illustrating a lens configuration of an imaging lens 10 according to Example 8 of the present disclosure. FIG. 15 is an optical sectional view of the lens configuration of the imaging lens 10 according to Example 8.

As illustrated in FIG. 15, in the imaging lens 10 according to Example 8, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.

Table 17 summarizes basic lens data for the imaging lens 10 according to Example 8, including values specified therefor. In Table 17, values of curvature radius Ri for the surfaces S11 and S12 provided with * as aspherical surfaces are of paraxial curvature radius.

[Table 17]

| Basic lens data for Example 8 | | | | | | | |
|---|---|---|---|---|---|---|---|
| Number i | Surface Si | Ri | Di | Nd | | vd | |
| 1 | S1 | -20.2460 | 0.7000 | N1 | 1.516798 | $\nu1$ | 64.1983 |
| 2 | S2 | 3.8916 | 1.8755 | - | | | |
| 3 | S3 | -8.5000 | 0.9000 | N2 | 1.568829 | v2 | 56.0441 |
| 4 | S4 | 200.0000 | 0.1000 | - | | | |
| 5 | S5 | 20.0000 | 3.5000 | N3 | 1.921189 | v3 | 23.9561 |
| 6 | S6 | -20.6466 | 1.2808 | - | | | |
| 7 | S7 | - | 0.0000 | | | | |
| 8 | S8 | 7.8728 | 2.4462 | N4 | 1.617998 | v4 | 63.3959 |
| 9 | S9 | -8.6827 | 0.9000 | N5 | 1.846663 | v5 | 23.7848 |
| 10 | S10 | 30.0000 | 0.4754 | - | | | |
| 11* | S11 | 17.6861 | 2.3891 | N6 | 1.618806 | v6 | 63.8554 |
| 12* | S12 | -5.9497 | 2.0000 | - | | | |
| 13 | S13 | 1E+18 | 1.0000 | N7 | 1.51633 | v7 | 64.142 |
| 14 | S14 | 1E+18 | 5.8734 | - | | | |
| 15 | S15 | 1E+18 | 0.4000 | N8 | 1.51633 | v8 | 64.142 |

(continued)

| Basic lens data for Example 8 | | | | | |
|---|---|---|---|---|---|
| Number i | Surface Si | Ri | Di | Nd | vd |
| 16 | S16 | 1E+18 | 0.1595 | | - |
| - | Image plane 21 | ∞ | 0.0000 | |
| Surfaces with * are aspherical. | | | | | |

Table 18 summarizes aspherical surface data for the imaging lens 10 according to Example 8, including aspherical coefficients thereof. The aspherical surface data summarized in Table 18 is data on the surfaces S11 and S12 of the sixth lens 160.

[Table 18]

| Aspherical surface data for Example 8 | | |
|---|---|---|
| Surface | S11 | S12 |
| k | -100 | -4.448295265 |
| A | 0.000473004 | -0.002387939 |
| B | -3.16E-04 | 1.15E-05 |
| C | 2.25E-05 | -1.01E-08 |
| D | -1.40E-06 | -3.29E-07 |

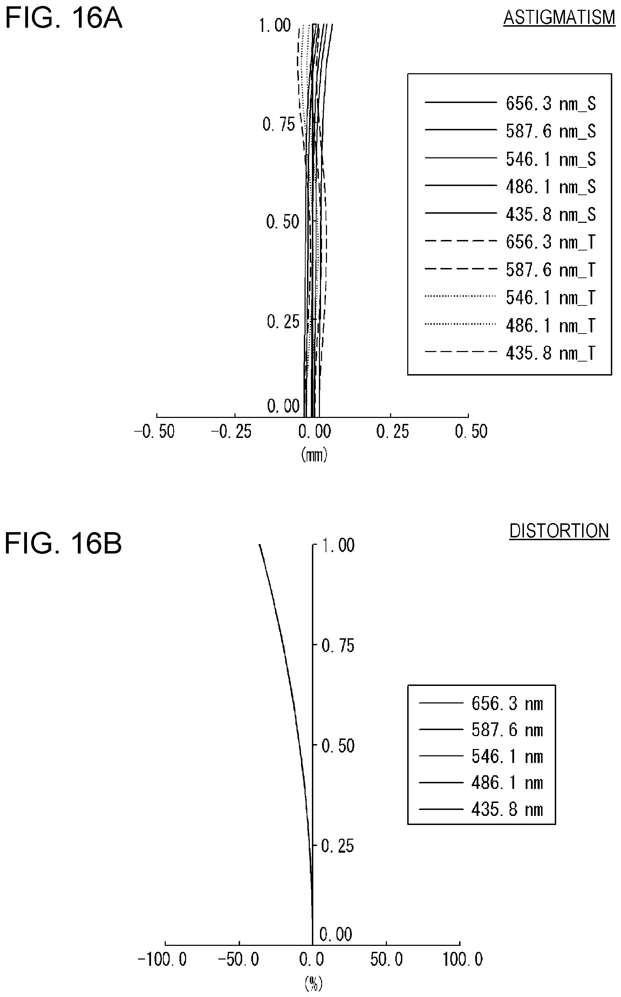

FIGs. 16A and 16B are aberration diagrams for the imaging lens 10 illustrated in FIG. 15. FIG. 16A is a graph illustrating astigmatism of the imaging lens 10 illustrated in FIG. 15. FIG. 16B is a graph illustrating distortion of the imaging lens 10 illustrated in FIG. 15. As illustrated in FIGs. 16A and 16B, Example 8 provides an imaging lens 10 in which aberrations of astigmatism and distortion are favorably corrected and that is excellent in focusing performance.

(EXAMPLE 9)

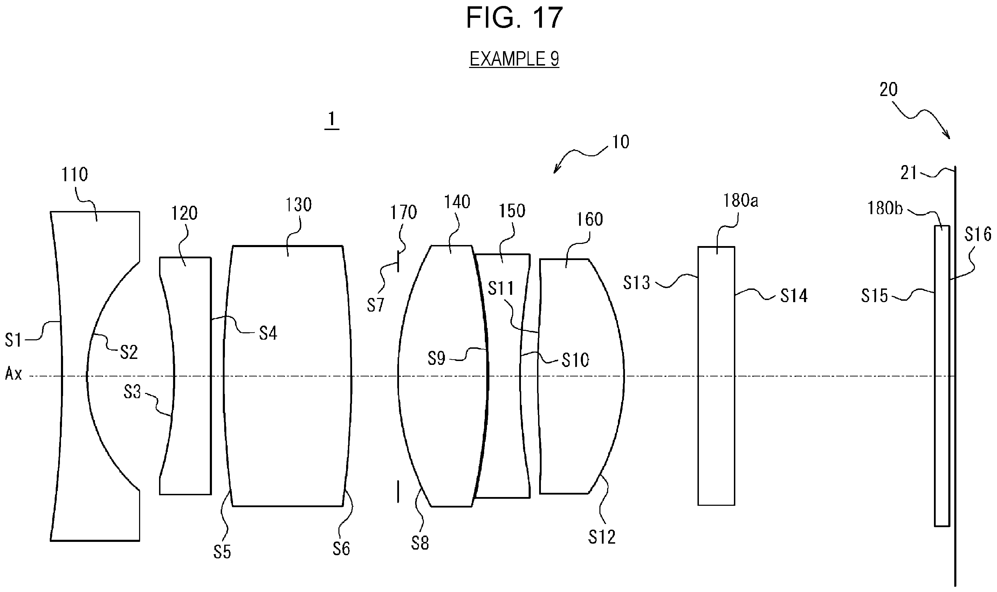

FIG. 17 is a diagram illustrating a lens configuration of an imaging lens 10 according to Example 9 of the present disclosure. FIG. 17 is an optical sectional view of the lens configuration of the imaging lens 10 according to Example 9.
As illustrated in FIG. 17, in the imaging lens 10 according to Example 9, the first lens 110 is a biconcave lens having negative refractive power and a spherical shape. The second lens 120 is a biconcave lens having negative refractive power and a spherical shape. The third lens 130 is a biconvex lens having positive refractive power and a spherical shape. The fourth lens 140 is a biconvex lens having positive refractive power and a spherical shape. The fifth lens 150 is a biconcave lens having negative refractive power and a spherical shape. The sixth lens 160 is a biconvex lens having positive refractive power and an aspherical shape.
Table 19 summarizes basic lens data for the imaging lens 10 according to Example 9, including values specified therefor. In Table 19, values of curvature radius Ri for the surfaces S11 and S12 provided with * as aspherical surfaces are of paraxial curvature radius.

[Table 19]

| Basic lens data for Example 9 | | | | | | | |
|---|---|---|---|---|---|---|---|
| Number i | Surface Si | Ri | Di | Nd | | vd | |
| 1 | S1 | -31.1984 | 0.7000 | N1 | 1.516798 | ν1 | 64.1983 |
| 2 | S2 | 4.1285 | 2.4000 | | - | | |
| 3 | S3 | -10.0546 | 1.0000 | N2 | 1.568829 | ν2 | 56.0441 |
| 4 | S4 | 1000.0000 | 0.3500 | | - | | |
| 5 | S5 | 26.0135 | 3.5000 | N3 | 1.921189 | ν3 | 23.9561 |

(continued)

| Basic lens data for Example 9 | | | | | | | |
|---|---|---|---|---|---|---|---|
| Number i | Surface Si | Ri | Di | Nd | | vd | |
| 6 | S6 | -26.0135 | 1.2808 | - | | | |
| 7 | S7 | - | 0.0000 | | | | |
| 8 | S8 | 7.4984 | 2.4462 | N4 | 1.617998 | v4 | 63.3959 |
| 9 | S9 | -15.1637 | 0.9000 | N5 | 1.846663 | v5 | 23.7848 |
| 10 | S10 | 17.1647 | 0.4754 | - | | | |
| 11* | S11 | 17.6861 | 2.3891 | N6 | 1.618806 | v6 | 63.8554 |
| 12* | S12 | -5.9497 | 2.0000 | - | | | |
| 13 | S13 | 1E+18 | 1.0000 | N7 | 1.51633 | v7 | 64.142 |
| 14 | S14 | 1E+18 | 5.8734 | - | | | |
| 15 | S15 | 1E+18 | 0.4000 | N8 | 1.51633 | v8 | 64.142 |
| 16 | S16 | IE+18 | 0.1595 | - | | | |
| - | Image plane 21 | ∞ | 0.0000 | | | | |
| Surfaces with * are aspherical. | | | | | | | |

Table 20 summarizes aspherical surface data for the imaging lens 10 according to Example 9, including aspherical coefficients thereof. The aspherical surface data summarized in Table 20 is data on the surfaces S11 and S12 of the sixth lens 160.

[Table 20]

| Aspherical surface data for Example 9 | | |
|---|---|---|
| Surface | S11 | S12 |
| k | -100 | -4.448295265 |
| A | 0.000473004 | -0.002387939 |
| B | -3.16E-04 | 1.15E-05 |
| C | 2.25E-05 | -1.01E-08 |
| D | -1.40E-06 | -3.29E-07 |

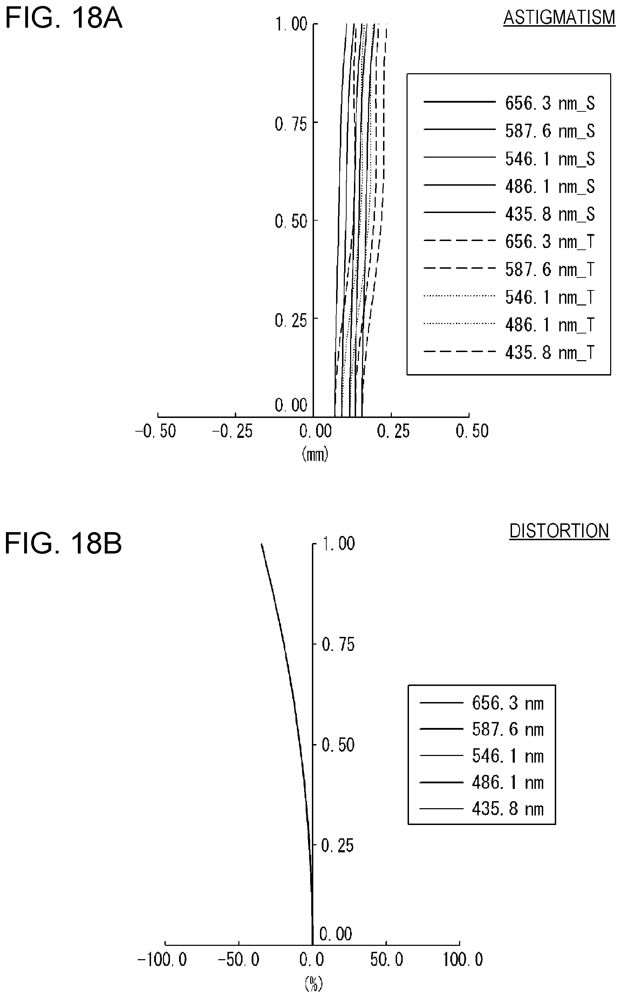

FIGs. 18A and 18B are aberration diagrams for the imaging lens 10 illustrated in FIG. 17. FIG. 18A is a graph illustrating astigmatism of the imaging lens 10 illustrated in FIG. 17. FIG. 18B is a graph illustrating distortion of the imaging lens 10 illustrated in FIG. 17. As illustrated in FIGs. 18A and 18B, Example 9 provides an imaging lens 10 in which aberrations of astigmatism and distortion are favorably corrected and that is excellent in focusing performance.

An imaging lens 10 and an imaging apparatus 1 according to one embodiment of the present disclosure that has been described above can realize high optical performance with appropriately set lens shapes while having a six-lens configuration for compactness, lightness, and inexpensiveness. Thus, an imaging lens 10 and an imaging apparatus 1 that are compact and exhibit high optical performance can be realized to be employed in cameras such as monitoring cameras and onboard cameras.

In the imaging lens 10, satisfying Conditional Expression (1) enables easy correction of astigmatism and also enables reduction in occurrence of field curvature. In the imaging lens 10, satisfying Conditional Expression (2) enables easy reduction in focus shift that occurs with a temperature change.

In the imaging lens 10, satisfying Conditional Expression (3) facilitates correction of astigmatism and processing of the first lens 110, and also enables reduction in damage to the first lens 110 that may be caused by a retainer or the like.

In the imaging lens 10, satisfying Conditional Expression (4) enables easy correction of axial chromatic aberration of the imaging lens 10 as a whole.

In the imaging lens 10, since the two surfaces of the second lens 120 are each a concave surface, the second lens 120 can easily include a flat receiving portion with no additional processing performed on the second lens 120. The flat receiving portion allows the second lens 120 to be in contact with the first lens 110 and the spacer or the like at a flat surface.

In the imaging lens 10, satisfying Conditional Expression (5) enables easy correction of spherical aberration.

In the imaging lens 10, satisfying Conditional Expression (6) enables reduction in occurrence of field curvature.

In the imaging lens 10, satisfying Conditional Expression (7) enables reduction in occurrence of lateral chromatic aberration. Furthermore, in the imaging lens 10, axial chromatic aberration of the imaging lens 10 as a whole is correctable.

In the imaging lens 10, satisfying Conditional Expression (8) enables reduction in occurrence of spherical aberration.

In the imaging lens 10, since the object-side surface of the first lens 110 is a concave surface, a structure to be held with a retainer or the like can be formed easily with no additional processing performed on the first lens 110. Furthermore, in the imaging lens 10, occurrence of ghost can be reduced.

In the imaging lens 10, satisfying Conditional Expression (9) enables reduction of astigmatism. Furthermore, the imaging lens 10 is allowed to have a reduced size in the total-length direction and in the radial direction. Such a configuration increases the degree of freedom in designing a camera housing.

In the imaging lens 10, satisfying Conditional Expression (10) enables reduction in occurrence of field curvature. Furthermore, in the imaging lens 10, axial chromatic aberration is favorably correctable.

In the imaging lens 10, satisfying Conditional Expression (11) enables reduction in occurrence of field curvature and easy correction of axial chromatic aberration that occurs in the third lens 130.

In the imaging lens 10, since the fourth lens 140 and the fifth lens 150 are combined as a cemented lens, an optical system that exhibits low tolerance sensitivity can be realized. Furthermore, the imaging lens 10 can be assembled with a reduced workload.

In the imaging lens 10, since the two surfaces of the sixth lens 160 are each an aspherical surface, the angle of incidence of light on the imaging device 20 is easily adjustable. Consequently, in the imaging lens 10, spherical aberration and astigmatism are easily correctable.

In the imaging lens 10, satisfying Conditional Expression (12) enables easy correction of field curvature and also enables reduction in tolerance sensitivity of the imaging lens 10.

In the imaging lens 10, each of the first lens 110, the second lens 120, the third lens 130, the fourth lens 140, the fifth lens 150, and the sixth lens 160 is made of a glass material. Such a configuration can reduce yellowing due to ultraviolet light, changes in optical characteristics due to temperature changes, and the like.

In the imaging lens 10, satisfying Conditional Expression (13) enables easy provision of an imaging area to be satisfied by the imaging apparatus 1 intended for, for example, onboard cameras.

In the imaging lens 10, satisfying Conditional Expression (14) enables reduction in occurrence of lateral chromatic aberration in the opposite direction and also enables easy correction of axial chromatic aberration.

In the imaging lens 10, satisfying Conditional Expression (15) enables easy correction of field curvature and also enables easy correction of axial chromatic aberration with the negative fifth lens 150.

In the imaging lens 10, satisfying Conditional Expression (16) enables easy correction of axial chromatic aberration. In the imaging lens 10, satisfying Conditional Expression (17) enables reduction in occurrence of field curvature and occurrence of axial chromatic aberration.

In the imaging lens 10, satisfying Conditional Expression (18) enables reduction in tilting of the image plane 21 toward the image side.

In the imaging lens 10, satisfying Conditional Expression (19) enables easy correction of axial chromatic aberration and also enables reduction in occurrence of astigmatism.

In the imaging lens 10, satisfying Conditional Expression (20) enables reduction in occurrence of spherical aberration and in tilting of the image plane 21 toward the image side.

In the imaging lens 10, satisfying Conditional Expression (21) enables correction of axial chromatic aberration of the optical system as a whole.

In the imaging lens 10, satisfying Conditional Expression (22) enables reduction in occurrence of astigmatism and in tilting of the image plane 21 in the meridional direction toward the object side.

In the imaging lens 10, satisfying Conditional Expression (23) enables reduction in occurrence of astigmatism and in occurrence of field curvature. In the imaging lens 10, satisfying Conditional Expression (24) enables reduction in occurrence of field curvature and also enables correction of astigmatism.

In the imaging lens 10, satisfying Conditional Expression (25) enables reduction in occurrence of lateral chromatic aberration.

In the imaging lens 10, satisfying Conditional Expression (26) enables reduction in occurrence of axial chromatic aberration.

In the imaging lens 10, satisfying Conditional Expression (27) enables reduction in occurrence of axial chromatic aberration.

In the imaging lens 10, satisfying Conditional Expression (28) enables easy provision of a satisfactory back focus and also enables reduction in occurrence of field curvature.

In the imaging lens 10, satisfying Conditional Expression (29) enables reduction in occurrence of axial chromatic aberration.

In the imaging lens 10, satisfying Conditional Expression (30) enables reduction in occurrence of astigmatism and in tilting of the image plane 21 in the meridional direction toward the object side. In the imaging lens 10, satisfying Conditional Expression (31) enables correction of axial chromatic aberration.

In the imaging lens 10, satisfying Conditional Expression (32) enables reduction in occurrence of astigmatism and also enables easy correction of axial chromatic aberration.

In the imaging lens 10, satisfying Conditional Expression (33) enables reduction in occurrence of astigmatism and also enables reduction in curvature of the image plane 21 in the meridional direction.

In the imaging lens 10, satisfying Conditional Expression (34) enables reduction in the angles of incidence of rays that are incident on the image plane 21.

In the imaging lens 10, satisfying Conditional Expression (35) enables reduction in occurrence of astigmatism.

In the imaging lens 10, satisfying Conditional Expression (36) enables easy correction of lateral chromatic aberration and also enables easy realization of cost reduction for the imaging lens 10 with a selection of an inexpensive material.

In the imaging lens 10, satisfying Conditional Expression (37) enables easy correction of astigmatism and also enables reduction in occurrence of field curvature. In the imaging lens 10, satisfying Conditional Expression (38) allows axial chromatic aberration occurred in the fourth lens 140 to be corrected with the fifth lens 150, and also enables easy realization of cost reduction for the imaging lens 10 with a selection of an inexpensive material.

In the imaging lens 10, satisfying Conditional Expression (39) enables correction of lateral chromatic aberration and also prevents the refractive power of the sixth lens 160 from becoming too high. Such a configuration enables reduction in occurrence of field curvature.

In the imaging lens 10, satisfying Conditional Expression (40) enables reduction in tolerance sensitivity and also enables appropriate correction of astigmatism.

In the imaging lens 10, satisfying Conditional Expression (41) enables easy correction of lateral chromatic aberration and also enables increase in the degree of freedom in selecting the material for the sixth lens 160.

In the imaging lens 10, satisfying Conditional Expression (42) facilitates incorporation of optical members into the imaging lens 10 and also facilitates the design of the optical system.

It is obvious to those skilled in the art that the present disclosure can be embodied in other given forms, in addition to the above embodiment, without departing from the spirit or essential features thereof. Hence, the above description is only exemplary and is not limiting. The scope of the disclosure is defined not by the above description but by the appended claims. Among various changes, some changes made within a scope equivalent to the scope of the disclosure are encompassed in the disclosure.

For example, the shapes, sizes, arrangements, orientations, numbers, and the like of the above-described elements are not limited to those described above or illustrated in the drawings. The shapes, sizes, arrangements, orientations, numbers, and the like of the elements may be determined in any way, as long as the functions of the elements can be realized.

While an imaging lens 10 according to an embodiment has been described above, the present disclosure is not limited to the imaging lenses 10 according to the above examples. Various alterations can be made thereto without departing from the essence of the invention. For example, the specifications of the imaging lenses 10 according to the examples are only exemplary, and various changes in the parameters can be made within the scope of the present disclosure.

Some exemplary embodiments of the present disclosure will be given below. Note that embodiments of the present disclosure are not limited to the following.

[Appendix 1] An imaging lens comprising:

in order from an object side,
a first lens having negative refractive power;
a second lens having negative refractive power;
a third lens having positive refractive power;
an aperture stop;
a fourth lens having positive refractive power;
a fifth lens having negative refractive power; and
a sixth lens having positive refractive power,
wherein letting curvature radius of an object-side surface of the first lens be R1; curvature radius of an image-side surface of the first lens be R2; temperature coefficient of refractive index of the fourth lens for d-line within a temperature range of 20°C to 40°C be dN4/dT; temperature coefficient of refractive index of the sixth lens for the d-line within the temperature range of 20°C to 40°C be dN6/dT; and focal length of the imaging lens for the d-line be f, the imaging lens satisfies conditional expressions:

$$0.6 < (R1 + R2)/(R1 - R2) < 0.8 \quad (1)$$

$$-1.1 < (dN4/dT + dN6/dT)/f < -0.7 \quad (2)$$

[Appendix 2] The imaging lens according to appendix 1,
wherein letting on-axis thickness of the first lens be D1, the imaging lens satisfies a conditional expression:

$$0.14 < D1/f \quad (3)$$

[Appendix 3] The imaging lens according to appendix 1 or 2,
wherein letting focal length of the second lens for the d-line be f2, the imaging lens satisfies a conditional expression:

$$-3.8 < f2/f < -2 \quad (4)$$

[Appendix 4] The imaging lens according to any one of appendices 1 to 3,
wherein two surfaces of the second lens are each a concave surface.
[Appendix 5] The imaging lens according to any one of appendices 1 to 4,
wherein letting on-axis distance from the image-side surface of the first lens to an object-side surface of the second lens be D2, the imaging lens satisfies a conditional expression:

$$0.36 < D2/f < 0.6 \quad (5)$$

[Appendix 6] The imaging lens according to any one of appendices 1 to 5,
wherein the imaging lens satisfies a conditional expression:

$$-6.7 < R1/f < -4.4 \quad (6)$$

[Appendix 7] The imaging lens according to any one of appendices 1 to 6,
wherein letting Abbe number of the third lens be v3, the imaging lens satisfies a conditional expression:

$$4.7 < v3/f < 5.7 \quad (7)$$

[Appendix 8] The imaging lens according to any one of appendices 1 to 7,
wherein letting refractive index of the first lens be N1, the imaging lens satisfies a conditional expression:

$$N1/f < 0.34 \quad (8)$$

[Appendix 9] The imaging lens according to any one of appendices 1 to 8,
wherein the object-side surface of the first lens is a concave surface.
[Appendix 10] The imaging lens according to any one of appendices 1 to 9,
wherein letting on-axis total length of the imaging lens be Da, the imaging lens satisfies a conditional expression:

$$Da/f < 5.2 \quad (9)$$

[Appendix 11] The imaging lens according to any one of appendices 1 to 10,
wherein letting focal length of the first lens for the d-line be f1, the imaging lens satisfies a conditional expression:

$$-1.5 < f1/f < -1.2 \quad (10)$$

[Appendix 12] The imaging lens according to any one of appendices 1 to 11,

wherein letting focal length of the third lens for the d-line be f3, the imaging lens satisfies a conditional expression:

$$1.6 < f3/f < 3.1 \quad (11)$$

[Appendix 13] The imaging lens according to any one of appendices 1 to 12,
wherein the fourth lens and the fifth lens are combined as a cemented lens.
[Appendix 14] The imaging lens according to any one of appendices 1 to 13,
wherein two surfaces of the sixth lens are each an aspherical surface.
[Appendix 15] The imaging lens according to any one of appendices 1 to 14,
wherein letting focal length of the sixth lens for the d-line be f6, the imaging lens satisfies a conditional expression:

$$1.45 < f6/f < 1.8 \quad (12)$$

[Appendix 16] The imaging lens according to any one of appendices 1 to 15,
wherein each of the first lens, the second lens, the third lens, the fourth lens, the fifth lens, and the sixth lens is made of a glass material.
[Appendix 17] The imaging lens according to any one of appendices 1 to 16,
wherein letting half-angle of view of a ray incident on an image surface at a maximum image-height position be W, the imaging lens satisfies a conditional expression:

$$48 < W \quad (13)$$

[Appendix 18] The imaging lens according to any one of appendices 1 to 17,
wherein letting focal length of the fifth lens for the d-line be f5, the imaging lens satisfies a conditional expression:

$$-2.0 < f5/f < -1.1 \quad (14)$$

[Appendix 19] The imaging lens according to any one of appendices 1 to 18,
wherein letting focal length of the fourth lens for the d-line be f4, the imaging lens satisfies a conditional expression:

$$1.2 < f4/f < 1.8 \quad (15)$$

[Appendix 20] The imaging lens according to any one of appendices 1 to 19,
wherein letting on-axis distance from an image-side surface of the second lens to an object-side surface of the third lens be D4; the focal length of the imaging lens for the d-line be f; and on-axis thickness of the second lens be D3, the imaging lens satisfies conditional expressions:

$$D4/f < 0.08 \quad (16)$$

$$0.12 < D3/f < 0.23 \quad (17)$$

[Appendix 21] The imaging lens according to any one of appendices 1 to 20,
wherein letting refractive index of the second lens be N2, the imaging lens satisfies:

$$N2/f < 0.33 \quad (18)$$

[Appendix 22] The imaging lens according to any one of appendices 1 to 21,
wherein letting curvature radius of an object-side surface of the second lens be R3; and curvature radius of an image-side surface of the second lens be R4, the imaging lens satisfies a conditional expression:

$$-1 < (R3 + R4)/(R3 - R4) < -0.82 \quad (19)$$

[Appendix 23] The imaging lens according to any one of appendices 1 to 22,

wherein letting the curvature radius of the image-side surface of the first lens be R2, the imaging lens satisfies a conditional expression:

$$0.77 < R2/f < 0.9 \quad (20)$$

[Appendix 24] The imaging lens according to any one of appendices 1 to 23,
wherein letting Abbe number of the fifth lens be v5, the imaging lens satisfies a conditional expression:

$$4.8 < v5/f < 5.5 \quad (21)$$

[Appendix 25] The imaging lens according to any one of appendices 1 to 24,
wherein letting synthetic focal length of the fourth lens, the fifth lens, and the sixth lens for the d-line be fg, the imaging lens satisfies a conditional expression:

$$1.4 < fg/f < 1.8 \quad (22)$$

[Appendix 26] The imaging lens according to any one of appendices 1 to 25,
wherein letting curvature radius of an object-side surface of the second lens be R3; the focal length of the imaging lens for the d-line be f; curvature radius of an object-side surface of the third lens be R5; and curvature radius of an image-side surface of the third lens be R6, the imaging lens satisfies conditional expressions:

$$-2.2 < R3/f < -1.2 \quad (23)$$

$$-0.15 < (R5 + R6)/(R5 - R6) < 0.15 \quad (24)$$

[Appendix 27] The imaging lens according to any one of appendices 1 to 26,
wherein letting on-axis thickness of the third lens be D5, the imaging lens satisfies a conditional expression:

$$D5/f < 0.75 \quad (25)$$

[Appendix 28] The imaging lens according to any one of appendices 1 to 27,
wherein letting on-axis distance from an image-side surface of the third lens to an object-side surface of the fourth lens be D6, the imaging lens satisfies a conditional expression:

$$0.03 < D6/f \quad (26)$$

[Appendix 29] The imaging lens according to any one of appendices 1 to 28,
wherein letting Abbe number of the first lens be v1, the imaging lens satisfies a conditional expression:

$$10 < v1/f < 15 \quad (27)$$

[Appendix 30] The imaging lens according to any one of appendices 1 to 29,
wherein letting refractive index of the fourth lens be N4, the imaging lens satisfies a conditional expression:

$$N4/f < 0.4 \quad (28)$$

[Appendix 31] The imaging lens according to any one of appendices 1 to 30,
wherein letting synthetic focal length of the fourth lens and the fifth lens for the d-line be fg, the imaging lens satisfies a conditional expression:

$$4.8 < fg/f \quad (29)$$

[Appendix 32] The imaging lens according to any one of appendices 1 to 31,

wherein letting synthetic focal length of the fourth lens, the fifth lens, and the sixth lens for the d-line be fg; the focal length of the imaging lens for the d-line be f; and refractive index of the fifth lens be N5, the imaging lens satisfies conditional expressions:

$$1.4 < fg/f < 1.8 \quad (30)$$

$$0.35 < N5/f \quad (31)$$

[Appendix 33] The imaging lens according to any one of appendices 1 to 32,
wherein letting curvature radius of an object-side surface of the fourth lens be R8; and curvature radius of an image-side surface of the fourth lens be R9, the imaging lens satisfies a conditional expression:

$$-0.4 < (R8 + R9)/(R8 - R9) < 0.25 \quad (32)$$

[Appendix 34] The imaging lens according to any one of appendices 1 to 33,
wherein letting on-axis thickness of the fourth lens be D8, the imaging lens satisfies a conditional expression:

$$0.4 < D8/f < 0.7 \quad (33)$$

[Appendix 35] The imaging lens according to any one of appendices 1 to 34,
wherein letting on-axis distance from an image-side surface of the fifth lens to an object-side surface of the sixth lens be D10, the imaging lens satisfies a conditional expression:

$$0.015 < D10/f \quad (34)$$

[Appendix 36] The imaging lens according to any one of appendices 1 to 35,
wherein the imaging lens satisfies a conditional expression:

$$R8/f < 1.9 \quad (35)$$

[Appendix 37] The imaging lens according to any one of appendices 1 to 36,
wherein letting Abbe number of the second lens be v2, the imaging lens satisfies a conditional expression:

$$11 < v2/f \quad (36)$$

[Appendix 38] The imaging lens according to any one of appendices 1 to 37,
wherein letting curvature radius of an object-side surface of the sixth lens be R11; curvature radius of an image-side surface of the sixth lens be R12; Abbe number of the fourth lens be v4; and the focal length of the imaging lens for the d-line be f, the imaging lens satisfies conditional expressions:

$$0.05 < (R11 + R12)/(R11 - R12) < 0.7 \quad (37)$$

$$12 < v4/f \quad (38),$$

and
wherein two surfaces of the second lens are each a concave surface.
[Appendix 39] The imaging lens according to any one of appendices 1 to 38,
wherein letting on-axis thickness of the sixth lens be D11, the imaging lens satisfies a conditional expression:

$$0.4 < D11/f < 0.9 \quad (39)$$

[Appendix 40] The imaging lens according to any one of appendices 1 to 39,
wherein the imaging lens satisfies a conditional expression:

$$R12/f < -1.2 \quad (40)$$

[Appendix 41] The imaging lens according to any one of appendices 1 to 40,
wherein letting refractive index of the sixth lens be N6, the imaging lens satisfies a conditional expression:

$$N6/f < 0.4 \quad (41)$$

[Appendix 42] The imaging lens according to any one of appendices 1 to 41,
wherein letting back focus be Db, the imaging lens satisfies a conditional expression:

$$1.7 < Db/f \quad (42)$$

[Appendix 43] An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting curvature radius of an object-side surface of the first lens be R1; curvature radius of an image-side surface of the first lens be R2; temperature coefficient of refractive index of the fourth lens for d-line within a temperature range of 20°C to 40°C be dN4/dT; temperature coefficient of refractive index of the sixth lens for the d-line within the temperature range of 20°C to 40°C be dN6/dT; and focal length of the imaging lens for the d-line be f, the imaging apparatus satisfies conditional expressions:

$$0.6 < (R1 + R2)/(R1 - R2) < 0.8 \quad (43)$$

$$-1.1 < (dN4/dT + dN6/dT)/f < -0.7 \quad (44)$$

[Appendix 44] An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting on-axis distance from an image-side surface of the second lens to an object-side surface of the third lens be D4; focal length of the imaging lens for d-line be f; and on-axis thickness of the second lens be D3, the imaging apparatus satisfies conditional expressions:

$$D4/f < 0.08 \quad (45)$$

$$0.12 < D3/f < 0.23 \quad (46)$$

[Appendix 45] An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting curvature radius of an object-side surface of the second lens be R3; focal length of the imaging lens for d-line be f; curvature radius of an object-side surface of the third lens be R5; and curvature radius of an image-side surface of the third lens be R6, the imaging apparatus satisfies conditional expressions:

$$-2.2 < R3/f < -1.2 \quad (47)$$

$$-0.15 < (R5 + R6)/(R5 - R6) < 0.15 \quad (48)$$

[Appendix 46] An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting synthetic focal length of the fourth lens, the fifth lens, and the sixth lens for d-line be fg; focal length of the imaging lens for the d-line be f; and refractive index of the fifth lens be N5, the imaging apparatus satisfies conditional expressions:

$$1.4 < fg/f < 1.8 \quad (49)$$

$$0.35 < N5/f \quad (50)$$

[Appendix 47] An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting curvature radius of an object-side surface of the sixth lens be R11; curvature radius of an image-side surface of the sixth lens be R12; Abbe number of the fourth lens be v4; and focal length of the imaging lens for d-line be f, the imaging apparatus satisfies conditional expressions:

$$0.05 < (R11 + R12)/(R11 - R12) < 0.7 \quad (51)$$

$$12 < v4/f \quad (52),$$

and
wherein two surfaces of the second lens are each a concave surface.

REFERENCE SIGNS

1 imaging apparatus
10 imaging lens
110 first lens
120 second lens
130 third lens
140 fourth lens
150 fifth lens
160 sixth lens
170 aperture stop
180a first flat plate
180b second flat plate
20 imaging device
21 image surface
Ax optical axis
Di surface interval
Da total length
Db back focus
Ri curvature radius
Si surface

**Claims**

1. An imaging lens comprising:

   in order from an object side,
   a first lens having negative refractive power;
   a second lens having negative refractive power;
   a third lens having positive refractive power;
   an aperture stop;
   a fourth lens having positive refractive power;

a fifth lens having negative refractive power; and
a sixth lens having positive refractive power,
wherein letting curvature radius of an object-side surface of the first lens be R1; curvature radius of an image-side surface of the first lens be R2; temperature coefficient of refractive index of the fourth lens for d-line within a temperature range of 20°C to 40°C be dN4/dT; temperature coefficient of refractive index of the sixth lens for the d-line within the temperature range of 20°C to 40°C be dN6/dT; and focal length of the imaging lens for the d-line be f, the imaging lens satisfies conditional expressions:

$$0.6 < (R1 + R2)/(R1 - R2) < 0.8 \quad (1)$$

$$-1.1 < (dN4/dT + dN6/dT)/f < -0.7 \quad (2)$$

**2.** The imaging lens according to claim 1,
wherein letting on-axis thickness of the first lens be D1, the imaging lens satisfies a conditional expression:

$$0.14 < D1/f \quad (3)$$

**3.** The imaging lens according to claim 1 or 2,
wherein letting focal length of the second lens for the d-line be f2, the imaging lens satisfies a conditional expression:

$$-3.8 < f2/f < -2 \quad (4)$$

**4.** The imaging lens according to claim 1 or 2,
wherein two surfaces of the second lens are each a concave surface.

**5.** The imaging lens according to claim 1 or 2,
wherein letting on-axis distance from the image-side surface of the first lens to an object-side surface of the second lens be D2, the imaging lens satisfies a conditional expression:

$$0.36 < D2/f < 0.6 \quad (5)$$

**6.** The imaging lens according to claim 1 or 2,
wherein the imaging lens satisfies a conditional expression:

$$-6.7 < R1/f < -4.4 \quad (6)$$

**7.** The imaging lens according to claim 1 or 2,
wherein letting Abbe number of the third lens be v3, the imaging lens satisfies a conditional expression:

$$4.7 < v3/f < 5.7 \quad (7)$$

**8.** The imaging lens according to claim 1 or 2,
wherein letting refractive index of the first lens be N1, the imaging lens satisfies a conditional expression:

$$N1/f < 0.34 \quad (8)$$

**9.** The imaging lens according to claim 1 or 2,
wherein the object-side surface of the first lens is a concave surface.

**10.** The imaging lens according to claim 1 or 2,
wherein letting on-axis total length of the imaging lens be Da, the imaging lens satisfies a conditional expression:

$$Da/f < 5.2 \quad (9)$$

11. The imaging lens according to claim 1 or 2,
wherein letting focal length of the first lens for the d-line be f1, the imaging lens satisfies a conditional expression:

$$-1.5 < f1/f < -1.2 \quad (10)$$

12. The imaging lens according to claim 1 or 2,
wherein letting focal length of the third lens for the d-line be f3, the imaging lens satisfies a conditional expression:

$$1.6 < f3/f < 3.1 \quad (11)$$

13. The imaging lens according to claim 1 or 2,
wherein the fourth lens and the fifth lens are combined as a cemented lens.

14. The imaging lens according to claim 1 or 2,
wherein two surfaces of the sixth lens are each an aspherical surface.

15. The imaging lens according to claim 1 or 2,
wherein letting focal length of the sixth lens for the d-line be f6, the imaging lens satisfies a conditional expression:

$$1.45 < f6/f < 1.8 \quad (12)$$

16. The imaging lens according to claim 1 or 2,
wherein each of the first lens, the second lens, the third lens, the fourth lens, the fifth lens, and the sixth lens is made of a glass material.

17. The imaging lens according to claim 1 or 2,
wherein letting half-angle of view of a ray incident on an image surface at a maximum image-height position be W, the imaging lens satisfies a conditional expression:

$$48 < W \quad (13)$$

18. The imaging lens according to claim 1 or 2,
wherein letting focal length of the fifth lens for the d-line be f5, the imaging lens satisfies a conditional expression:

$$-2.0 < f5/f < -1.1 \quad (14)$$

19. The imaging lens according to claim 1 or 2,
wherein letting focal length of the fourth lens for the d-line be f4, the imaging lens satisfies a conditional expression:

$$1.2 < f4/f < 1.8 \quad (15)$$

20. The imaging lens according to claim 1 or 2,
wherein letting on-axis distance from an image-side surface of the second lens to an object-side surface of the third lens be D4; the focal length of the imaging lens for the d-line be f; and on-axis thickness of the second lens be D3, the imaging lens satisfies conditional expressions:

$$D4/f < 0.08 \quad (16)$$

$$0.12 < D3/f < 0.23 \quad (17)$$

**21.** The imaging lens according to claim 1 or 2,
wherein letting refractive index of the second lens be N2, the imaging lens satisfies:

$$N2/f < 0.33 \quad (18)$$

**22.** The imaging lens according to claim 1 or 2,
wherein letting curvature radius of an object-side surface of the second lens be R3; and curvature radius of an image-side surface of the second lens be R4, the imaging lens satisfies a conditional expression:

$$-1 < (R3 + R4)/(R3 - R4) < -0.82 \quad (19)$$

**23.** The imaging lens according to claim 1 or 2,
wherein letting the curvature radius of the image-side surface of the first lens be R2, the imaging lens satisfies a conditional expression:

$$0.77 < R2/f < 0.9 \quad (20)$$

**24.** The imaging lens according to claim 1 or 2,
wherein letting Abbe number of the fifth lens be v5, the imaging lens satisfies a conditional expression:

$$4.8 < v5/f < 5.5 \quad (21)$$

**25.** The imaging lens according to claim 1 or 2,
wherein letting synthetic focal length of the fourth lens, the fifth lens, and the sixth lens for the d-line be fg, the imaging lens satisfies a conditional expression:

$$1.4 < fg/f < 1.8 \quad (22)$$

**26.** The imaging lens according to claim 1 or 2,
wherein letting curvature radius of an object-side surface of the second lens be R3; the focal length of the imaging lens for the d-line be f; curvature radius of an object-side surface of the third lens be R5; and curvature radius of an image-side surface of the third lens be R6, the imaging lens satisfies conditional expressions:

$$-2.2 < R3/f < -1.2 \quad (23)$$

$$-0.15 < (R5 + R6)/(R5 - R6) < 0.15 \quad (24)$$

**27.** The imaging lens according to claim 1 or 2,
wherein letting on-axis thickness of the third lens be D5, the imaging lens satisfies a conditional expression:

$$D5/f < 0.75 \quad (25)$$

**28.** The imaging lens according to claim 1 or 2,
wherein letting on-axis distance from an image-side surface of the third lens to an object-side surface of the fourth lens be D6, the imaging lens satisfies a conditional expression:

$$0.03 < D6/f \quad (26)$$

**29.** The imaging lens according to claim 1 or 2,
wherein letting Abbe number of the first lens be v1, the imaging lens satisfies a conditional expression:

$$10 < \nu 1/f < 15 \quad (27)$$

30. The imaging lens according to claim 1 or 2,
    wherein letting refractive index of the fourth lens be N4, the imaging lens satisfies a conditional expression:

$$N4/f < 0.4 \quad (28)$$

31. The imaging lens according to claim 1 or 2,
    wherein letting synthetic focal length of the fourth lens and the fifth lens for the d-line be fg, the imaging lens satisfies a conditional expression:

$$4.8 < fg/f \quad (29)$$

32. The imaging lens according to claim 1 or 2,
    wherein letting synthetic focal length of the fourth lens, the fifth lens, and the sixth lens for the d-line be fg; the focal length of the imaging lens for the d-line be f; and refractive index of the fifth lens be N5, the imaging lens satisfies conditional expressions:

$$1.4 < fg/f < 1.8 \quad (30)$$

$$0.35 < N5/f \quad (31)$$

33. The imaging lens according to claim 1 or 2,
    wherein letting curvature radius of an object-side surface of the fourth lens be R8; and curvature radius of an image-side surface of the fourth lens be R9, the imaging lens satisfies a conditional expression:

$$-0.4 < (R8 + R9)/(R8 - R9) < 0.25 \quad (32)$$

34. The imaging lens according to claim 1 or 2,
    wherein letting on-axis thickness of the fourth lens be D8, the imaging lens satisfies a conditional expression:

$$0.4 < D8/f < 0.7 \quad (33)$$

35. The imaging lens according to claim 1 or 2,
    wherein letting on-axis distance from an image-side surface of the fifth lens to an object-side surface of the sixth lens be D10, the imaging lens satisfies a conditional expression:

$$0.015 < D10/f \quad (34)$$

36. The imaging lens according to claim 1 or 2,
    wherein the imaging lens satisfies a conditional expression:

$$R8/f < 1.9 \quad (35)$$

37. The imaging lens according to claim 1 or 2,
    wherein letting Abbe number of the second lens be v2, the imaging lens satisfies a conditional expression:

$$11 < \nu 2/f \quad (36)$$

38. The imaging lens according to claim 1 or 2,

wherein letting curvature radius of an object-side surface of the sixth lens be R11; curvature radius of an image-side surface of the sixth lens be R12; Abbe number of the fourth lens be v4; and the focal length of the imaging lens for the d-line be f, the imaging lens satisfies conditional expressions:

$$0.05 < (R11 + R12)/(R11 - R12) < 0.7 \quad (37)$$

$$12 < v4/f \quad (38),$$

and
wherein two surfaces of the second lens are each a concave surface.

39. The imaging lens according to claim 1 or 2,
wherein letting on-axis thickness of the sixth lens be D11, the imaging lens satisfies a conditional expression:

$$0.4 < D11/f < 0.9 \quad (39)$$

40. The imaging lens according to claim 1 or 2,
wherein the imaging lens satisfies a conditional expression:

$$R12/f < -1.2 \quad (40)$$

41. The imaging lens according to claim 1 or 2,
wherein letting refractive index of the sixth lens be N6, the imaging lens satisfies a conditional expression:

$$N6/f < 0.4 \quad (41)$$

42. The imaging lens according to claim 1 or 2,
wherein letting back focus be Db, the imaging lens satisfies a conditional expression:

$$1.7 < Db/f \quad (42)$$

43. An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting curvature radius of an object-side surface of the first lens be R1; curvature radius of an image-side surface of the first lens be R2; temperature coefficient of refractive index of the fourth lens for d-line within a temperature range of 20°C to 40°C be dN4/dT; temperature coefficient of refractive index of the sixth lens for the d-line within the temperature range of 20°C to 40°C be dN6/dT; and focal length of the imaging lens for the d-line be f, the imaging apparatus satisfies conditional expressions:

$$0.6 < (R1 + R2)/(R1 - R2) < 0.8 \quad (43)$$

$$-1.1 < (dN4/dT + dN6/dT)/f < -0.7 \quad (44)$$

**44.** An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,

wherein letting on-axis distance from an image-side surface of the second lens to an object-side surface of the third lens be D4; focal length of the imaging lens for d-line be f; and on-axis thickness of the second lens be D3, the imaging apparatus satisfies conditional expressions:

$$D4/f < 0.08 \quad (45)$$

$$0.12 < D3/f < 0.23 \quad (46)$$

**45.** An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting curvature radius of an object-side surface of the second lens be R3; focal length of the imaging lens for d-line be f; curvature radius of an object-side surface of the third lens be R5; and curvature radius of an image-side surface of the third lens be R6, the imaging apparatus satisfies conditional expressions:

$$-2.2 < R3/f < -1.2 \quad (47)$$

$$-0.15 < (R5 + R6)/(R5 - R6) < 0.15 \quad (48)$$

**46.** An imaging apparatus comprising:

an imaging lens comprising:

in order from an object side,

a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting synthetic focal length of the fourth lens, the fifth lens, and the sixth lens for d-line be fg; focal length of the imaging lens for the d-line be f; and refractive index of the fifth lens be N5, the imaging apparatus satisfies conditional expressions:

$$1.4 < fg/f < 1.8 \quad (49)$$

$$0.35 < N5/f \quad (50)$$

47. An imaging apparatus comprising:

an imaging lens comprising:

in order from an object side,
a first lens having negative refractive power,
a second lens having negative refractive power,
a third lens having positive refractive power,
an aperture stop,
a fourth lens having positive refractive power,
a fifth lens having negative refractive power, and
a sixth lens having positive refractive power; and

an imaging device configured to convert an optical image into an electric signal, the optical image being focused through the imaging lens,
wherein letting curvature radius of an object-side surface of the sixth lens be R11; curvature radius of an image-side surface of the sixth lens be R12; Abbe number of the fourth lens be v4; and focal length of the imaging lens for d-line be f, the imaging apparatus satisfies conditional expressions:

$$0.05 < (R11 + R12)/(R11 - R12) < 0.7 \quad (51)$$

$$12 < v4/f \quad (52),$$

and
wherein two surfaces of the second lens are each a concave surface.

# FIG. 1
## EXAMPLE 1

## FIG. 2A

ASTIGMATISM

## FIG. 2B

DISTORTION

# FIG. 3

EXAMPLE 2

EP 4 582 848 A1

## FIG. 4A

ASTIGMATISM

## FIG. 4B

DISTORTION

EP 4 582 848 A1

# FIG. 5

EXAMPLE 3

FIG. 6A

ASTIGMATISM

| | |
|---|---|
| ——— | 656. 3 nm_S |
| ——— | 587. 6 nm_S |
| ——— | 546. 1 nm_S |
| ——— | 486. 1 nm_S |
| ——— | 435. 8 nm_S |
| – – – | 656. 3 nm_T |
| – – – | 587. 6 nm_T |
| ······· | 546. 1 nm_T |
| ······· | 486. 1 nm_T |
| – – – | 435. 8 nm_T |

(mm)

FIG. 6B

DISTORTION

| | |
|---|---|
| ——— | 656. 3 nm |
| ——— | 587. 6 nm |
| ——— | 546. 1 nm |
| ——— | 486. 1 nm |
| ——— | 435. 8 nm |

(%)

# FIG. 7

<u>EXAMPLE 4</u>

EP 4 582 848 A1

FIG. 8A

ASTIGMATISM

FIG. 8B

DISTORTION

# FIG. 9

EXAMPLE 5

FIG. 10A

ASTIGMATISM

| | |
|---|---|
| —————— | 656. 3 nm_S |
| —————— | 587. 6 nm_S |
| —————— | 546. 1 nm_S |
| —————— | 486. 1 nm_S |
| —————— | 435. 8 nm_S |
| – – – – – | 656. 3 nm_T |
| – – – – | 587. 6 nm_T |
| ············ | 546. 1 nm_T |
| ············ | 486. 1 nm_T |
| – – – – – | 435. 8 nm_T |

1.00

0.75

0.50

0.25

0.00

-0.50    -0.25    0.00    0.25    0.50

(mm)

FIG. 10B

DISTORTION

| | |
|---|---|
| —————— | 656. 3 nm |
| —————— | 587. 6 nm |
| —————— | 546. 1 nm |
| —————— | 486. 1 nm |
| —————— | 435. 8 nm |

1.00

0.75

0.50

0.25

0.00

-100.0    -50.0    0.0    50.0    100.0

(%)

# FIG. 11

<u>EXAMPLE 6</u>

EP 4 582 848 A1

## FIG. 12A

ASTIGMATISM

| | |
|---|---|
| —————— | 656.3 nm_S |
| —————— | 587.6 nm_S |
| —————— | 546.1 nm_S |
| —————— | 486.1 nm_S |
| —————— | 435.8 nm_S |
| – – – – | 656.3 nm_T |
| – – – – | 587.6 nm_T |
| ·········· | 546.1 nm_T |
| ·········· | 486.1 nm_T |
| – – – – | 435.8 nm_T |

(mm)

## FIG. 12B

DISTORTION

| | |
|---|---|
| —————— | 656.3 nm |
| —————— | 587.6 nm |
| —————— | 546.1 nm |
| —————— | 486.1 nm |
| —————— | 435.8 nm |

(%)

# FIG. 13

EXAMPLE 7

## FIG. 14A

ASTIGMATISM

656. 3 nm_S
587. 6 nm_S
546. 1 nm_S
486. 1 nm_S
435. 8 nm_S
656. 3 nm_T
587. 6 nm_T
546. 1 nm_T
486. 1 nm_T
435. 8 nm_T

1.00
0.75
0.50
0.25
0.00

-0.50   -0.25   0.00   0.25   0.50
(mm)

## FIG. 14B

DISTORTION

656. 3 nm
587. 6 nm
546. 1 nm
486. 1 nm
435. 8 nm

1.00
0.75
0.50
0.25
0.00

-100.0   -50.0   0.0   50.0   100.0
(%)

# FIG. 15

<u>EXAMPLE 8</u>

EP 4 582 848 A1

FIG. 16A

ASTIGMATISM

656.3 nm_S
587.6 nm_S
546.1 nm_S
486.1 nm_S
435.8 nm_S
656.3 nm_T
587.6 nm_T
546.1 nm_T
486.1 nm_T
435.8 nm_T

(mm)

FIG. 16B

DISTORTION

656.3 nm
587.6 nm
546.1 nm
486.1 nm
435.8 nm

(%)

# FIG. 17

EXAMPLE 9

EP 4 582 848 A1

FIG. 18A

ASTIGMATISM

| | |
|---|---|
| —————— | 656. 3 nm_S |
| —————— | 587. 6 nm_S |
| —————— | 546. 1 nm_S |
| —————— | 486. 1 nm_S |
| —————— | 435. 8 nm_S |
| – – – – | 656. 3 nm_T |
| – – – – | 587. 6 nm_T |
| ·········· | 546. 1 nm_T |
| ·········· | 486. 1 nm_T |
| – – – – | 435. 8 nm_T |

(mm)

FIG. 18B

DISTORTION

| | |
|---|---|
| —————— | 656. 3 nm |
| —————— | 587. 6 nm |
| —————— | 546. 1 nm |
| —————— | 486. 1 nm |
| —————— | 435. 8 nm |

(%)

## INTERNATIONAL SEARCH REPORT

| International application No. |
|---|
| **PCT/JP2023/030790** |

| | |
|---|---|
| **A.** | **CLASSIFICATION OF SUBJECT MATTER** |

*G02B 13/04*(2006.01)i; *G02B 13/18*(2006.01)i
FI:  G02B13/04; G02B13/18

According to International Patent Classification (IPC) or to both national classification and IPC

| | |
|---|---|
| **B.** | **FIELDS SEARCHED** |

Minimum documentation searched (classification system followed by classification symbols)

G02B13/04; G02B13/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 10-20189 A (ASAHI OPTICAL CO LTD) 23 January 1998 (1998-01-23) examples 1-4 | 44, 46, 47 |
| A | examples 1-4 | 1-43, 45 |
| X | JP 2020-46565 A (MAXELL HOLDINGS LTD) 26 March 2020 (2020-03-26) examples 1-3 | 45, 46 |
| A | examples 1-3 | 1-44, 47 |
| X | JP 2006-171597 A (MATSUSHITA ELECTRIC IND CO LTD) 29 June 2006 (2006-06-29) examples 1, 2, 4 | 47 |
| A | examples 1, 2, 4 | 1-46 |
| X | JP 2005-221920 A (KONICA MINOLTA OPTO INC) 18 August 2005 (2005-08-18) examples 3, 5 | 47 |
| A | examples 3, 5 | 1-46 |
| A | JP 2017-156570 A (RICOH CO LTD) 07 September 2017 (2017-09-07) entire text, all drawings | 1-47 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/030790**

**C.** **DOCUMENTS CONSIDERED TO BE RELEVANT**

| Category* | Citation of document, with indication, where appropriate, of the relevant passages | Relevant to claim No. |
|---|---|---|
| A | JP 2014-59466 A (RICOH CO LTD) 03 April 2014 (2014-04-03)<br>entire text, all drawings | 1-47 |

Form PCT/ISA/210 (second sheet) (January 2015)

**INTERNATIONAL SEARCH REPORT**
Information on patent family members

International application No.

**PCT/JP2023/030790**

| Patent document cited in search report | | | Publication date (day/month/year) | Patent family member(s) | | | Publication date (day/month/year) |
|---|---|---|---|---|---|---|---|
| JP | 10-20189 | A | 23 January 1998 | (Family: none) | | | |
| JP | 2020-46565 | A | 26 March 2020 | (Family: none) | | | |
| JP | 2006-171597 | A | 29 June 2006 | (Family: none) | | | |
| JP | 2005-221920 | A | 18 August 2005 | US | 2005/0174463 | A1 | |
| | | | | examples 3, 5 | | | |
| JP | 2017-156570 | A | 07 September 2017 | (Family: none) | | | |
| JP | 2014-59466 | A | 03 April 2014 | US | 2014/078605 | A1 | |
| | | | | entire text, all drawings | | | |
| | | | | US | 9104010 | B2 | |
| | | | | EP | 2708930 | A1 | |
| | | | | CN | 103676093 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022136280 A
- JP 2022136287 A
- JP 2022136291 A
- JP 2022136294 A
- JP 2022136302 A
- JP 2008008960 A
- JP 2013047753 A